# EUROPEAN PATENT APPLICATION

(11) **EP 3 799 521 A1**
(43) Date of publication of application: **31.03.2021**
(21) Application number: 20197441.7
(22) Date of filing: 22.09.2020
(51) Int. Cl.: H04W 84/20, H04W 84/18, H04W 52/02

(54) **METHOD AND COMMUNICATION SYSTEM FOR CONSTRUCTING CLUSTER-TYPE NETWORK**

(30) Priority: 25.09.2019 JP 2019174091; 19.03.2020 JP 2020049381
(71) Applicant: Mitsumi Electric Co., Ltd., Tama-shi, Tokyo 206-8567 (JP)
(72) Inventor: MIYAMOTO, Hirokatsu, Tokyo, 206-8567 (JP); OKADA, Tomoyuki, Tokyo, 206-8567 (JP); SHIMADA, Yuki, Tokyo, 206-8567 (JP)
(74) Representative: Dr. Solf & Zapf Patent- und Rechtsanwälte (München)

(57) **Abstract**

A method S100 for constructing a cluster-type network with a plurality of communication devices 10 contains a step S140 for transmitting signals containing state information 161 relating to states of the plurality of communication devices 10 among the plurality of communication devices 10 and a step S160, S170 for constructing the cluster-type network so that one of the plurality of communication devices 10 is set as the master unit 10A according to a predetermined master-slave determination condition 163 based on the state information 161 of each of the plurality of communication devices 10 contained in the signals.

## Description

### CROSS-REFERENCE TO RELATED APPLICATIONS

The present application claims priorities to Japanese Patent Application No. 2019-174091 filed on September 25, 2019 (entitled "METHOD AND COMMUNICATION SYSTEM FOR CONSTRUCTING STAR-TYPE NETWORK") and Japanese Patent Application No. 2020-049381 filed on March 19, 2020 (entitled "METHOD AND COMMUNICATION SYSTEM FOR CONSTRUCTING CLUSTER-TYPE NETWORK") and the contents of which are hereby fully incorporated by reference.

### TECHNICAL FIELD

The present invention generally relates to methods and communication systems for constructing a cluster-type network, in particular to a method and a communication system for constructing a cluster-type network so that one of a plurality of communication devices is set as a master unit according to a predetermined master-slave determination condition.

### BACKGROUND

In recent years, a field called loT (Internet of Things) has attracted attention. The loT means that all devices existing in the periphery of us are connected to communication networks such as the Internet or the LAN (Local Area Network) as its name implies. By utilizing the loT, it becomes possible to obtain various information and operate a device with a lower cost than before.

Factors attracting attention in the loT field contain miniaturization and low power consumption of a device which can perform wireless communication and progress in a wireless communication technology. In particular, a wireless communication standard called the BLE (Bluetooth (registered trademark) Low Energy) standard has been known in the field of wireless communication technology. Since the BLE standard consumes extremely little power, the BLE standard has been widely used in the loT field. Although the wireless communication according to the BLE standard has a short communicable distance and a low communication speed, the wireless communication according to the BLE standard consumes very little power. Thus, it is possible to perform one year or more of wireless communication with one coin battery (button battery) depending on a frequency of the wireless communication. Therefore, the wireless communication according to the BLE standard has been widely used in the loT field in which communication among a huge number of devices is required.

One-to-many (1:n) communication between a master unit and each of slave units according to the BLE standard can be performed by connecting the master unit and each of the slave units through pairing connections to construct a cluster-type network and then transmitting a command to each of the slave units which take a state (scanning state) for receiving the command from the master unit in sequence (for example, see patent document 1). Especially, among a variety types of cluster-type networks, a type in which all slave units are connected to one master unit as disclosed in Patent Document 1 is called a star-type network. By utilizing the star-type network, it is possible to control the plurality of slave units with an operation with respect to the one master unit. In addition, by reflecting an operation with respect to one of the slave units to the other slave units through the master unit, it is possible to control the other slave units with the operation with respect to the one of the slave units. As described above, characteristics of the star-type network that the plurality of slave units can be controlled by the operation with respect to the master unit and the operation with respect to the one slave unit can be reflected on the other slave units are very useful in the loT field in which a huge number of devices are communicably connected to each other.

As the cluster-type network, in addition to the star-type network as described above, there has been known a multi-hierarchy cluster-type network in which a plurality of submaster units are connected to one master unit and a plurality of lower hierarchy submaster units or slave units are connected to each of the plurality of submaster units. The multi-hierarchy cluster-type network is typically used to construct a large-scale network in which it is inefficient or unrealistic to simultaneously connect all slave units to one master unit from viewpoints of an arithmetic processing capability of the master unit, data communication speed and the like, a network in which devices participating the network are positionally distributed over a wide area and thus it is impossible to simultaneously connect all slave units to one master unit due to limitations on a communicable range of the master unit and the like.

In order to construct the cluster-type network as described above, a user of the communication devices, an administrator of the network or the like needs to establish pairing connections among the plurality of communication devices one by one so as to construct the desired cluster-type network. Thus, if there are many communication devices utilized as the submaster units or the slave units, the task of constructing the cluster-type network is a complicated task which requires a lot of effort and time.

The pairing connection based on the BLE standard is disconnected when at least one of two communication devices connected to each other is turned off. Thus, in an application in which power of the communication device is turned on only when processing of the communication device is required, it is necessary to perform the task of constructing the cluster-type network as described above every time when the processing of the communication device is required. Therefore, there are needs to easily and quickly construct the desired cluster-type network with the plurality of communication devices.

Further, since the master unit communicates with each of the submaster units and the slave units in the cluster-type network, a frequency of communication performed by the master unit is higher than a frequency of communication performed by each of the submaster units and the slave units. Thus, a processing load and a communication load of the master unit are large in the cluster-type network. Therefore, when the cluster-type network is constructed, it is preferable that a communication device having a high performance (for example, a communication device having a processor with a high arithmetic processing capability, a communication device of a latest version or the like) is set as the master unit. If a communication device having a highest performance among the plurality of communication devices used for constructing the cluster-type network can be set as the master unit, a processing efficiency of the cluster-type network can be improved as a whole.

Further, as described above, since the frequency of the communication performed by the master unit is higher than the frequency of the communication performed by each of the plurality of submaster units and the slave units in the cluster-type network, a battery of the master unit is drastically consumed. If the battery of the master unit is depleted and the power of the master unit is turned off in the cluster-type network, the cluster-type network is shut down. In order to reduce a risk of this unintentional shutdown of the cluster-type network, it is preferable that a communication device having a largest remaining battery capacity is set as a master unit when the cluster-type network is constructed.

However, a conventional method for constructing the cluster-type network is based on an assumption that the user of communication devices, the administrator of the network or the like sets one of a plurality of communication devices as a master unit in advance. Thus, the conventional method cannot automatically construct the cluster-type network so that a most preferable communication device among the plurality of communication devices is set as the master unit and the other communication devices are set as the submaster units or the slave units. Further, it is a complicated task that requires a lot of labor and time for the user of the communication devices, the administrator of the network or the like to manually check performance and a battery remaining capacity of each of the plurality of communication devices and determine which communication device should be set as the master unit when the cluster-type network is constructed. In addition, if the number of communication devices to be used for constructing the cluster-type network is large, such a task is not practically feasible.

### RELATED ART DOCUMENT

### PATENT DOCUMENT

JP 2018-5977A

### SUMMARY

### PROBLEM TO BE SOLVED BY THE INVENTION

The present invention has been made in view of the above-described problem of the conventional art. Accordingly, an object of the present invention is to provide a method and a communication system which can easily, quickly and automatically construct a desired cluster-type network so that one of a plurality of communication devices is set as a master unit based on a predetermined master-slave determination condition.

### MEANS FOR SOLVING THE PROBLEMS

The above object is achieved by the present inventions as defined in the following (1) to (15).
(1) A method for constructing a cluster-type network with a plurality of communication devices, comprising:
   transmitting signals containing state information related to states of the plurality of communication devices among the plurality of communication devices; and
   constructing the cluster-type network so that one of the plurality of communication devices is set as a master unit according to a predetermined master-slave determination condition and based on the state information of each of the plurality of communication devices contained in the signals.
(2) The method according to the above (1), wherein each of the plurality of communication devices is driven by electric power supplied from a battery included in each of the plurality of communication devices,
   wherein the state information of each of the plurality of communication devices contains a remaining capacity of the battery of each of the plurality of communication devices, and
   wherein the master-slave determination condition is a condition related to the battery of each of the plurality of communication devices.
(3) The method according to the above (2), wherein constructing the cluster-type network contains constructing the cluster-type network so that one communication device having a largest remaining capacity of the battery among the plurality of communication devices is set as the master unit.
(4) The method according to the above (1), wherein the state information of each of the plurality of communication devices contains an arithmetic processing capability of a processor of each of the plurality of communication devices, and
   wherein the master-slave determination condition is a condition related to the processor of each of the plurality of communication devices.
(5) The method according to the above (4), wherein constructing the cluster-type network contains constructing the cluster-type network so that one communication device having a highest arithmetic processing capability of the processor among the plurality of communication devices is set as the master unit.
(6) The method according to any one of the above (1) to (5), wherein constructing the cluster-type network contains:
   performing an authentication process among a plurality of communication devices with a predetermined authentication condition to determine the plurality of communication devices to be used for constructing the cluster-type network, and
   constructing the cluster-type network with only the plurality of communication devices determined to be used for constructing the cluster-type network.
(7) The method according to the above (6), wherein the predetermined authentication condition is whether or not the plurality of communication devices are located so as to be separated from each other within a predetermined separation distance, and
   wherein the cluster-type network is constructed from only the plurality of communication devices located so as to be separated from each other within the predetermined separation distance.
(8) The method according to the above (6), wherein the predetermined authentication condition is whether or not the communication device is located so as to be separated from arbitrary one of the plurality of communication devices within a predetermined separation distance, and
   wherein the cluster-type network is constructed from only the plurality of communication devices located so as to be separated from the arbitrary one of the plurality of communication devices within the predetermined separation distance.
(9) The method according to the above (6), wherein the predetermined authentication condition is whether or not the communication device can provide a predetermined function, and
   wherein the cluster-type network is constructed from only the plurality of communication devices which can provide the predetermined function.
(10) The method according to any one of the above (1) to (9), wherein the master unit is connected to each of the slave units through pairing connections according to a BLE (Bluetooth low energy) standard.
(11) The method according to any one of the above (1) to (10), wherein constructing the cluster-type network contains constructing a star-type network so that one of the plurality of communication devices is set as the master unit according to the predetermined master-slave determination condition and other communication devices of the plurality of communication devices are set as slave units.
(12) The method according to any one of the above (1) to (10), wherein constructing the cluster-type network contains constructing a multi-hierarchy cluster-type network so that one of the plurality of communication devices is set as the master unit according to the predetermined master-slave determination condition and other communication devices of the plurality of communication devices are set as submaster units or slave units.
(13) The method according to the above (12), wherein each of the plurality of communication devices is configured so that the number of other communication devices simultaneously connected thereto does not exceed a maximum connection number thereof, and
   wherein constructing the multi-hierarchy cluster-type network contains instructing from the master unit to each of the other communication devices belonging to a hierarchy level lower than a hierarchy level of the master unit by one to become the submaster unit when the number of other communication devices connected to the master unit reaches the maximum connection number of the master unit.
(14) The method according to the above (13), wherein constructing the multi-hierarchy cluster-type network further contains instructing from the submaster unit to each of the other communication devices belonging to a hierarchy level lower than the hierarchy level of the submaster unit by one to become a new submaster unit when the number of other communication devices connected to the submaster unit reaches the maximum connection number of the submaster unit.
(15) A communication system constructed from a plurality of communication devices,
   wherein each of the plurality of communication devices includes a processor and a memory connected to the processor,
   wherein the memory of each of the plurality of communication devices stores:
   an information transmitting module for mutually transmitting a signal containing state information related to a state of each of the communication devices among the plurality of communication devices, and
   a master-slave determination module for determining whether each of the communication devices should be set as a master unit or a slave unit according to a predetermined master-slave determination condition and based on the state information of each of the plurality of communication devices contained in the signal, and
   wherein a cluster-type network is constructed so that one of the plurality of communication devices is set as the master unit according to determination of the master-slave determination module.

### EFFECTS OF THE INVENTION

According to the method and the communication system of the present invention, it is possible to easily, quickly and automatically construct a desired cluster-type network so that one of the plurality of communication devices is set as the master unit according to the predetermined master-slave determination condition. Therefore, it is possible to improve the processing efficiency of the cluster-type network as a whole by setting a communication device having a high performance as the master unit and to reduce a risk of unintentional shutdown of the cluster-type network due to battery depletion of the master unit by setting a communication device having a largest remaining battery capacity as the master unit.

### BRIEF DESCRITION OF THE FIGURES

Fig. 1 is a view schematically showing a concept of a method according to a first embodiment of the present invention. Fig. 1A shows a communication system according to the first embodiment of the present invention before a star-type network is constructed by the method according to the first embodiment of the present invention. Fig. 1B shows the communication system according to the first embodiment of the present invention after the star-type network is constructed by the method according to the first embodiment of the present invention.
Fig. 2 is a block diagram of a communication device used in the method and the communication system according to the first embodiment of the present invention.
Fig. 3 is a view showing an example of state information stored in a memory of the communication device shown in Fig. 2.
Fig. 4 is a flowchart for explaining the method according to the first embodiment of the present invention.
Fig. 5 is a view schematically showing a concept of a method according to a second embodiment of the present invention. Fig. 5A shows a communication system according to the second embodiment of the present invention before a multi-hierarchy cluster-type network is constructed by the method according to the second embodiment of the present invention. Fig. 5B shows the communication system according to the second embodiment of the present invention after the multi-hierarchy cluster-type network is constructed by the method according to the second embodiment of the present invention.
Fig. 6 is a block diagram of a communication device used in the method and the communication system according to the second embodiment of the present invention.
Fig. 7 is a flowchart for explaining the method according to the second embodiment of the present invention.
Fig. 8 is a flowchart for explaining a network construction process performed in the method shown in Fig. 7.
Fig. 9 is a view schematically showing a concept of a method according to a third embodiment of the present invention. Fig. 9A shows a communication system according to the third embodiment of the present invention before a multi-hierarchy cluster-type network is reconstructed by the method according to the third embodiment of the present invention. Fig. 9B shows the communication system according to the third embodiment of the present invention after the multi-hierarchy cluster-type network is reconstructed by the method according to the third embodiment of the present invention.
Fig. 10 is a flowchart showing the method according to the third embodiment of the present invention.
Fig. 11 is a view schematically showing a concept of a method according to a fourth embodiment of the present invention. Fig. 11A shows a communication system according to the fourth embodiment of the present invention before a multi-hierarchy cluster-type network is reconstructed by the method according to the fourth embodiment of the present invention. Fig. 5B shows the communication system according to the fourth embodiment of the present invention after the multi-hierarchy cluster-type network is reconstructed by the method according to the fourth embodiment of the present invention.
Fig. 12 is a flowchart showing the method according to the fourth embodiment of the present invention.

### DETAILED DESCRIPTION

Hereinafter, a method and a communication system according to each embodiment of the present invention will be described in detail with reference to the accompanying drawings. The method and the communication system according to each embodiment of the present invention are used for automatically constructing a desired cluster-type network with a plurality of communication devices. In this specification, the term of "cluster-type network" contains a star-type network in which all slave units are connected to one master unit and a multi-hierarchy cluster-type network in which a plurality of submaster units are connected to one master unit and a plurality of other slave units or slave units are connected to each of the plurality of submaster units.

### <First embodiment

### «Communication System 1»

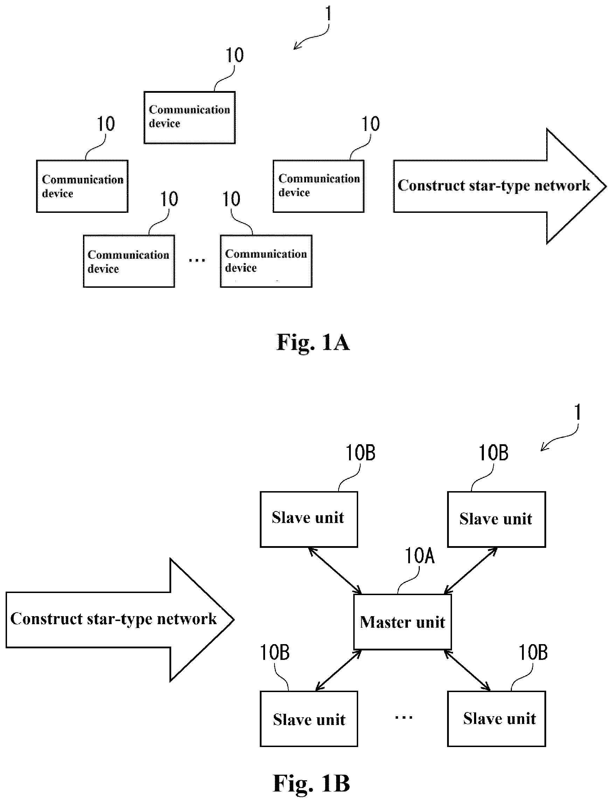

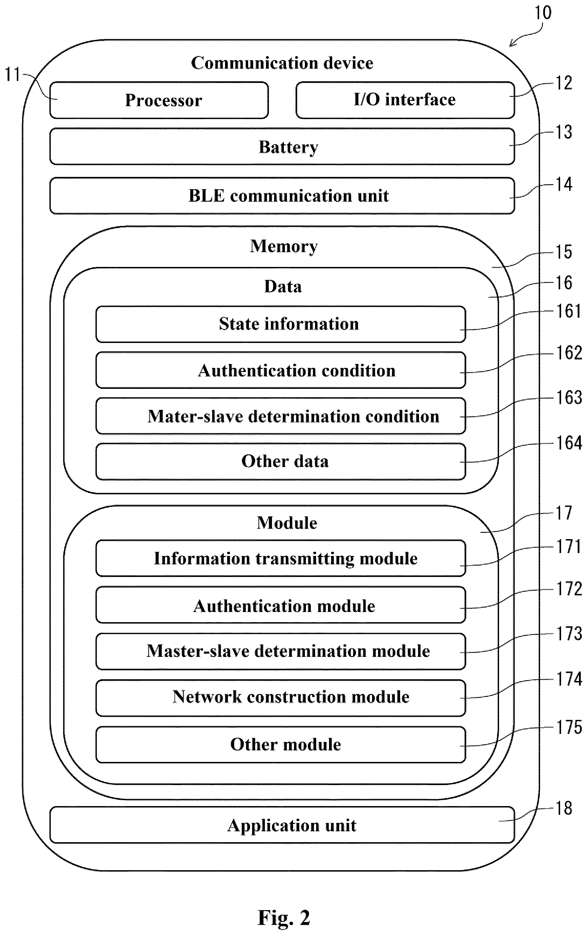

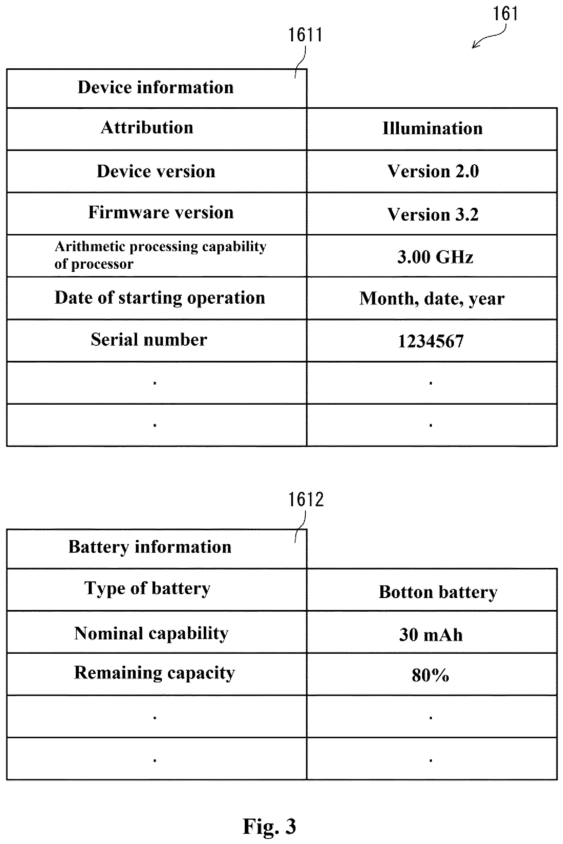

First, a communication system according to a first embodiment of the present invention will be described with reference to Figs. 1 to 3. Fig. 1 is a view schematically showing a concept of a method according to the first embodiment of the present invention. Fig. 2 is a block diagram of a communication device used in the method and the communication system according to the first embodiment of the present invention. Fig. 3 is a view showing an example of state information stored in a memory of the communication device shown in Fig. 2.

Fig. 1 schematically shows the concept of the method according to the first embodiment of the present invention. Fig. 1A shows a communication system 1 according to the first embodiment of the present invention before a star-type network is constructed by the method according to the first embodiment of the present invention. Fig. 1B shows the communication system 1 according to the first embodiment of the present invention after the star-type network is constructed by the method according to the first embodiment of the present invention. As shown in Figs. 1A and 1B, the method and the communication system according to the first embodiment of the present invention are used for automatically constructing the star-type network with a plurality of communication devices.

As shown in Fig. 1A, the communication system 1 according to the first embodiment of the present invention contains a plurality of communication devices 10. In a state shown in Fig. 1A, each of the plurality of communication devices 10 is not wirelessly connected to each other. Further, a user of the communication devices 10, an administrator of the communication system 1 or the like does not set which communication device 10 should be set as a master unit in advance.

By using the method according to the first embodiment of the present invention described in the following description, it is possible to construct a star-type network so that one of the plurality of communication devices 10 is set as a master unit 10A according to a predetermined master-slave determination condition and other communication devices 10 are set as slave units 10B as shown in Fig. 1B. The star-type network enables one-to-many (1:n) communication between the master unit 10A and each of the slave units 10B. The term of "star-type network" used in the specification refers to a network topology in which each of the slave units 10B is connected to one or more master units 10A and the plurality of slave units 10B are not directly connected to each other as shown in Fig. 1B. In the communication system 1 shown in Fig. 1B, the master unit 10A is connected to each of the slave units 10B through pairing connections according to the BLE (Bluetooth low energy) standard.

The master unit 10A individually transmits commands to the plurality of slave units 10B. The command transmitted from the master unit 10A to each of the slave units 10B contains an instruction related to a function (service) to be provided by each of the slave units 10B. Thus, each of the slave units 10B which has received the command from the master unit 10A provides a predetermined function (service) by performing a process according to the command. Therefore, the master unit 10A can collectively control the plurality of slave units 10B.

As described in the section of background art, the user of the communication devices 10, the administrator of the communication system 1 or the like sets one of the plurality of communication devices 10 as the master unit 10A in advance in order to construct a star-type network as shown in Fig. 1B in the related art. Thereafter, the user of the communication devices 10, the administrator of the communication system 1 or the like establishes the pairing connections between the master unit 10A and each of the slave units 10B one by one. According to the method of the first embodiment of the present embodiment, it is possible to easily, quickly and automatically construct the star-type network as shown in Fig. 1B.

Further, as described in the following description, the method of the present embodiment can make it possible to easily, quickly and automatically construct the star-type network so that a most preferable communication device 10 among the plurality of communication devices 10 is set as the master unit 10A based on a predetermined condition containing a condition related to performance of the communication device 10 and a condition related to a battery remaining capacity of the communication device 10 and other communication devices 10 are set as the slave units 10B. Thus, by setting one communication device 10 having a highest performance as the master unit 10A, it is possible to improve a processing efficiency of the star-type network as a whole. Alternatively, by setting one communication device 10 having a largest battery remaining capacity as the master unit 10A, it is possible to reduce a risk of unintentional shutdown of the star-type network due to battery depletion of the master unit 10A. Hereinafter, the communication device 10 used in the method and the communication system 1 of the present embodiment will be described in detail.

### «Communication device 10»

The communication device 10 shown in Fig. 2 functions as either one of the master unit 10A (also referred to as a central unit) and the slave unit 10B (also referred to as a peripheral unit) in the star-type network. When the communication device 10 functions as the master unit 10A, the master unit 10A can transmit the command to each of the communication devices 10 functioning as the slave units 10B to collectively control the plurality of slave units 10B.

The communication device 10 may be a computational device such as a desktop computer, a laptop computer, a notebook computer, a workstation, a tablet computer, a mobile phone, a smartphone, a PDA and a wearable device or a device to provide a predetermined function such as a sensor, an illumination, a camera, a speaker, a switch and a signal machine.

As shown in Fig. 2, the communication device 10 contains one or more processors 11 for performing control of the communication device 10, an I/O (input/output) interface 12 for performing input to the communication device 10 and output from the communication device 10, a battery 13 for providing electrical power for driving the communication device 10, a BLE communication unit 14 for performing wireless communication according to the BLE standard, one or more memories 15 storing data 16 and modules 17 used for performing processing of the communication device 10 and an application unit 18 for providing a predetermined function (service).

The one or more processors 11 are arithmetic units such as one or more microprocessors, microcomputers, microcontrollers, digital signal processors (DSPs), central processing units (CPUs), memory control units (MCUs), graphics processing units (GPUs), state-machines, logic circuits, application-specific integrated circuits (ASIC) and combinations thereof which can perform arithmetic operations such as signal manipulation based on computer readable instructions. In particular, the processor 11 is configured to fetch computer-readable instructions (e.g., data, programs and modules) stored in the memory 15 to perform operations, signal manipulation and control.

The I/O interface 12 contains various software and hardware interfaces such as a web interface and a graphical user interface (GUI). For example, the I/O interface 12 is an interface for peripheral devices such as a keyboard, a mouse, a touch panel display, an external memory, a printer and a display. The I/O interface 12 enables input to the communication device 10 through an input device such as a keyboard, a mouse and a touch panel display and output from the communication device 10 to a display, a printer, an external memory and the like. The I/O interface 12 may also allow the communication device 10 to communicate with any external device such as an externally provided web server or data server via a network such as the Internet.

The battery 13 is a power supply such as a button battery, a dry cell, a power supply and a lithium-ion battery provided inside the communication device 10. The electrical power provided from the battery 13 drives each component of the communication device 10.

The BLE communication unit 14 is a unit used for performing the wireless communication according to the BLE standard. The BLE communication unit 14 contains components such as an antenna, a transmission/reception circuit and a modulation/demodulation circuit to perform the wireless communication according to the BLE standard among the plurality of communication devices 10 in response to a command input from the processor 11. The communication device 10 can use the BLE communication unit 14 to transmit an advertisement signal to each of the other communication devices 10. The advertisement signal can contain an arbitrary command, data and information. Therefore, by appropriately changing the command, the data, the information and the like contained in the advertisement signal and exchanging the advertisement signal with each of the communication devices 10, the communication device 10 can perform necessary communication among the plurality of communication devices 10 without using any unique signal.

The memory 15 is a computer-readable medium containing a volatile storage medium (such as a RAM, a SRAM and a DRAM), a non-volatile storage medium (such as a ROM, an EPROM, an EEPROM, a flash memory, a hard disk, an optical disc, a CD-ROM, a digital versatile disc (DVD), a Blue-ray disc, a magnetic cassette, a magnetic tape, a magnetic disk) and combinations thereof.

The memory 15 is communicatively connected to the processor 11 and stores the data 16 required for allowing the communication device 10 to perform processing and the plurality of modules 17 which can be executed by the processor 11. In addition, the memory 15 has a function of temporarily storing data received, processed, and generated by one or more of the plurality of modules 17 and data required for performing processing of the plurality of modules 17.

The application unit 18 is a unit for performing processing according to the command transmitted from the master unit 10A to provide the predetermined function (service) in a case where the communication device 10 functions as the slave unit 10B. For example, in a case where the communication device 10 is a sensor, the application unit 18 is a sensor unit. In a case where the communication device 10 is an illumination, the application unit 18 is an illumination unit. The communication device 10 can use the application unit 18 to provide the predetermined function (service) according to the command transmitted from the master unit 10A.

The data 16 stored in the memory 15 contains state information 161 related to a state of the communication device 10, an authentication condition 162 for mutually performing an authentication process among the plurality of communication devices 10, a master-slave determination condition 163 for determining whether the communication device 10 should be set as the master unit 10A or the slave unit 10B and any number of other data 164 required for performing the processing of the communication device 10.

The state information 161 is information related to the state of the communication device 10. The state information 161 is used in the authentication process for determining communication devices 10 to be used for constructing the star-type network from the plurality of communication devices 10 and a master-slave determination process for determining which of the communication devices 10 determined to be used for constructing the star-type network should be set as the master unit 10A.

Fig. 3 shows one example of the state information 161. In the example shown in Fig. 3, the state information 161 contains device information 1611 indicating details of the communication device 10 and battery information 1612 related the battery 13. The device information 1611 contains an attribute indicating a function (for example, calculation, illuminating, sensing, photographing, sound emission, switching, traffic signal switching or the like) which can be provided by the communication device 10 using the application unit 18, version information of the communication device 10, firmware version information of the communication device 10, an arithmetic processing capability of the processor 11 of the communication device 10, a date of starting the operation of the communication device 10 and a serial number of the communication device 10. The state information 161 may contain other information in addition to the information shown in Fig. 3. The device information 1611 is written in the memory 15 when the communication device 10 is manufactured or the operation of the communication is started.

The battery information 1612 is information indicating details and a state of the battery 13. In the example shown in Fig. 3, the battery information 1612 contains a type of the battery 13, a nominal capacity of the battery 13 (a capacity of the battery 13 when it has not yet used) and a remaining capacity of the battery 13. The battery information 1612 may contain other information in addition to the information shown in Fig. 3. The remaining capacity of the battery 13 is checked when the communication device 10 is activated or always checked by the processor 11. The remaining capacity of the battery 13 in the battery information 1612 is updated by the remaining capacity of the battery 13 checked by the processor 11 at any time.

Referring back to Fig. 2, the authentication condition 162 is used for determining communication devices 10 to be used for constructing the star-type network from the plurality of communication devices 10. For example, the authentication condition 162 may contain (a) a positional condition of the communication device 10, (b) a condition related to the function provided by the communication device 10, (c) a condition related to the performance of the communication device 10, (d) a condition related to the battery 13 and/or any combinations of these conditions (a) to (d).

Regarding the above-mentioned condition (a), the authentication condition 162 may be a condition whether or not the plurality of communication devices 10 to be authenticated are located so as to be separated from each other within a predetermined separation distance. For example, the authentication condition 162 may be set so that the authentication processes performed between two communication devices 10 mutually performing the authentication processes with respect to each other succeed when a separation distance between the two communication devices 10 is equal to or less than the predetermined separation distance. In this case, the star-type network is constructed from only communication devices 10 which are positioned close to each other by the predetermined separation distance or less.

Since each of the communication devices 10 performs the wireless communication according to the BLE standard, strength of the advertisement signal transmitted from each of the communication devices 10 is defined by the BLE standard. On the other hand, the strength of the advertising signal transmitted from one of the two communication devices 10 mutually performing the authentication processes with respect to each other and received by the other one of the two communication devices 10 is inversely proportional to the separation distance between the two communication devices 10. Thus, the communication device 10 receiving the advertisement signal can refer to the strength of the received signal (RSSI: Received Signal Strength Indication) to calculate the separation distance between the communication device 10 transmitting the advertisement signal and the communication device 10 receiving the advertisement signal. For example, the authentication condition 162 may be set so that the authentication processes between the two communication devices 10 succeed only when the strength (RSSI) of the advertisement signal exchanged between the two communication devices 10 mutually performing the authentication processes is equal to or larger than a predetermined threshold value (e.g., -60 dB). In this case, the star-type network is constructed from only communication devices 10 which are separated from each other within a predetermined separation distance determined by the predetermined threshold of the strength of the received advertisement signal (RSSI).

Further, the authentication condition 162 may be a condition whether or not the communication device 10 to be authenticated is located so as to be separated from arbitrary one of the plurality of communication devices 10 within a predetermined separation distance. The arbitrary one of the plurality of communication devices 10 may be a communication device 10 to which the operation for constructing the star-type network has been performed or a communication device 10 which has been set in advance by the user of the communication device 10, the administrator of the communication system 1 or the like. In this case, the star-type network is constructed from only communication devices 10 located in a predetermined range from the arbitrary one of the plurality of communication devices 10.

Regarding the above-mentioned condition (b), the authentication condition 162 may be a condition related to the attribution of the communication device 10. For example, the authentication condition 162 may be set so that the authentication process succeeds when the attribution of the state information 161 of the communication device 10 is referred and the communication device 10 can provide a predetermined function or service. In this case, the star-type network is constructed from only communication devices 10 which can provide the predetermined function such as calculation, sensing, illuminating and the like. With this configuration, the star-type network can be constructed from only the plurality of communication devices 10 which can provide the same function or service.

Regarding the above-mention condition (c), the authentication condition 162 may be the condition related to the performance of the communication device 10. For example, the authentication condition 162 may be a condition related to the performance of the processor 11 of the communication device 10 to be authenticated. More specifically, the authentication condition 162 may be set so that the authentication process succeeds when the arithmetic processing capability of the processor 11 of the communication device 10 to be authenticated is equal to or higher than a predetermined threshold value (for example, 1.00 GHz). Alternatively, the authentication condition 162 may be set so that the authentication process succeeds when the device version or the firmware version of the communication device 10 to be authenticated is newer than a predetermined version. In this case, the star-type network is constructed from only communication devices 10 which satisfy a predetermined performance requirement defined by the arithmetic processing capability of the processor 11 or the version information. With this configuration, it is possible to prevent communication devices 10 which do not satisfy the predetermined performance requirement from being incorporated into the star-type network and thus it is possible to prevent deterioration of the processing performance of the star-type network as a whole.

Regarding the above-mentioned condition (d), the authentication condition 162 may be the condition related to the battery 13 of the communication device 10. The authentication condition 162 may be set so that the authentication process succeeds when the type of the battery 13 of the communication device 10 to be authenticated is a predetermined type, may be set so that the authentication process succeeds when the nominal capacity of the battery 13 of the communication device 10 to be authenticated is equal to or larger than a predetermined threshold or may be set so that the authentication process succeeds when the remaining capacity of the battery 13 of the communication device 10 to be authenticated is equal to or larger than a predetermined threshold. In this case, the star-type network is constructed from only communication devices 10 which satisfy the predetermined requirement related to the battery 13 (such as the type, the nominal capacity and the remaining capacity of the battery 13). With this configuration, it is possible to equalize the performance or the remaining capacity of each of the batteries 13 of the plurality of communication devices 10 constructing the star-type network.

Further, the authentication condition 162 may be any combinations of the above-mentioned conditions (a) to (d). By using the authentication condition 162 in which the above-mentioned conditions (a) to (d) are appropriately combined, it is possible to construct the star-type network with only communication devices 10 having predetermined characteristics. Namely, by appropriately setting the authentication condition 162, it is possible to limit the plurality of communication devices 10 used for constructing the star-type network. Since many different types of communication devices 10 are provided at different locations as required in the loT field, the states and the performances of the communication devices 10 available for constructing the star-type network are not necessarily equal to each other. Therefore, if the star-type network is constructed by simply using all of communication devices 10 existing in a communicable range, there are undesired cases such as a case where a size of the star-type network becomes large more than necessary, a case where communication devices 10 providing unnecessary functions are incorporated into the star-type network and a case where communication devices 10 whose batteries are likely to be depleted are incorporated in the star-type network. On the other hand, in the present embodiment, it is possible to construct the star-type network with only the communication devices 10 having the desired characteristics (such as performance and battery characteristics) by appropriately setting the authentication condition 162. Therefore, the convenience and reliability of the star-type network can be improved.

The above-mentioned settings of the authentication condition 162 are provided as merely examples. Any condition derivable from a communication condition among the plurality of communication devices 10 or the state information 161 mutually transmitted among the plurality of communication devices 10 may be used as the authentication condition 162. The authentication condition 162 as described above can be arbitrarily set by the user of the communication device 10, the administrator of the communication system 1 or the like at the time of manufacturing the communication device, at the time of starting operation of the communication device 10 or at arbitrary timing.

The master-slave determination condition 163 is used in the master-slave determination process for determining whether the communication device 10 determined to be used for constructing the star-type network by the authentication process using the authentication condition 162 described above should be the master unit 10A or the slave unit 10B. The master-slave determination condition 163 is not particularly limited. For example, the master-slave determination condition 163 may contain a condition related to the performance of the communication device 10, a condition related to the battery 13 of the communication device 10 and a combination thereof.

Regarding the condition related to the performance of the communication device 10, the master-slave determination condition 163 may be set so as to set one communication device 10 whose processor 11 has a highest arithmetic processing capability as the master unit 10A among the plurality of communication devices 10 determined to be used for constructing the star-type network by the authentication process using the authentication condition 162 described above. In this case, the star-type network is constructed so that one communication device 10 including the processor 11 having the highest arithmetic processing capability among the plurality of communication devices 10 determined to be used for constructing the star-type network is set as the master unit 10A and the other communication devices 10 are set as the slave units 10B. Since the communication device 10 including the processor 11 having the highest arithmetic processing capability is set as the master unit 10A whose processing load is the highest, it is possible to improve the processing efficiency of the star-type network as a whole. Alternatively, the master-slave determination condition 163 may be set so as to set one communication device 10 having a newest device version and/or firmware version as the master unit 10A among the plurality of communication devices 10 determined to be used for constructing the star-type network. There is a tendency that a communication device 10 having a newer device version and/or firmware version has a higher arithmetic processing capability. Thus, this case can also improve the processing efficiency of the star-type network as a whole.

Regarding the condition related to the battery 13 of the communication device 10, the master-slave determination condition 163 may be set so as to set one communication device 10 whose battery 13 has a largest remaining capacity as the master unit 10A among the plurality of communication devices 10 determined to be used for constructing the star-type network by the authentication process using the authentication condition 162 described above. In this case, the star-type network is constructed so that the communication device 10 whose battery 13 has the largest remaining capacity among the plurality of communication devices 10 determined to be used for constructing the star-type network is set as the master unit 10A and other communication devices 10 are set as the slave units 10B. As described in the section of background art, since the frequency of the communication of the master unit 10A is higher than the frequency of the communication of each of the slave units 10B in the star-type network, the battery 13 of the master unit 10A is drastically consumed and there is a high risk that the star-type network is unintentionally shut down due to the battery depletion of the master unit 10A. By constructing the star-type network so that the one communication device 10 whose battery 13 has the largest remaining capacity is set as the master unit 10A, it is possible to reduce the risk that the star-type network is unintentionally shut down due to the battery depletion of the master unit 10A.

Further, the master-slave determination condition 163 may be the combination of the condition related to the performance of the communication device 10 and the condition related to the battery 13 of the communication device 10. By using the master-slave determination condition 163 in which the condition related to the performance of the communication device 10 and the condition related to the battery 13 of the communication device 10 are appropriately combined, it is possible to construct the star-type network so that one communication device 10 having predetermined characteristics is set as the master unit 10A. The above-mentioned settings of the master-slave determination condition 163 are provided as merely examples. Any condition derivable from the communication condition among the plurality of communication devices 10 or the state information 161 mutually transmitted among the plurality of communication devices 10 may be used as the master-slave determination condition 163. The master-slave determination condition 163 can be arbitrarily set by the user of the communication device 10, the administrator of the communication system 1 or the like at the time of manufacturing the communication device 10, at the time of starting operation of the communication device 10 or at arbitrary timing.

The modules 17 stored in the memory 15 are computer readable instructions executable by the processor 11, such as routines, applications, programs, algorithms, libraries, objects, components, data structures and combinations thereof.

The modules 17 contains an information transmitting module 171 for mutually transmitting the advertisement signal containing the status information 161 thereof among the plurality of communication devices 10, an authentication module 172 for performing the authentication process for determining communication devices 10 to be used for constructing the star-type network from the plurality of communication devices 10, a master-slave determination module 173 for determining whether the communication module 173 should be set as the master unit 10A or the slave unit 10B, a network construction module 174 for establishing pairing connections to construct the star-type network and any number of other modules 175 for complementing the functions provided by the communication device 10.

The information transmitting module 171 is used for mutually transmitting the advertisement signal containing the state information 161 thereof stored in the memory 15 among the plurality of communication devices 10. In the communication system 1 taking the state shown in Fig. 1A, when a predetermined operation for constructing the star-type network is performed on any one of the plurality of communication devices 10, the information transmitting module 171 generates the advertisement signal containing the state information 161 thereof stored in the memory 15 and mutually transmits the advertisement signal containing the state information 161 thereof among the plurality of communication devices 10.

Referring back to Fig. 2, the authentication module 172 is used for performing the authentication process for determining communication devices 10 to be used for constructing the star-type network from the plurality of communication devices 10 with the authentication condition 162 stored in the memory 15 when the communication device 10 receives the state information 161 from other communication devices 10. When the communication device 10 receives the state information 161 from one of the other communication devices 10, the authentication module 172 performs the authentication process for this other communication device 10 with the authentication condition 162 stored in the memory 15.

A result of the authentication process performed by the communication device 10 for the other communication device 10 is temporarily stored in the memory 15. In the method of the present embodiment, only a communication device 10 for which all of the authentication processes performed by all of the other communication devices 10 succeed may be determined to be used for constructing the star-type network. Alternatively, only a communication device 10 for which at least one of the authentication processes performed by the other communication devices 10 succeeds may be determined to be used for constructing the star-type network. The user of the communication device 10, the administrator of the communication system 1 or the like can arbitrarily change the configuration whether only the communication device 10 for which all of the authentication processes performed by all of the other communication devices 10 succeed should be used for constructing the star-type network or only the communication device 10 for which at least one of the authentication processes performed by the other communication devices 10 succeeds should be used for constructing the star-type network.

The master-slave determination module 173 is used for the master-slave determination process for determining whether the communication device 10 should be set as the master unit 10A or the slave unit 10B according to the master-slave determination condition 163 stored in the memory 15. The master-slave determination module 173 performs the master-slave determination process for determining whether the communication device 10 should be set as the master unit 10A or the slave unit 10B according to the master-slave determination condition 163 stored in the memory 15 based on the state information 161 transmitted from each of the communication devices 10 determined to be used for constructing the star-type network by the authentication process performed by the authentication module 172. A result of the master-slave determination process performed by the master-slave determination module 173 is temporarily stored in the memory 15.

As a result of the master-slave determination process performed by the master-slave determination module 173 of each of the communication devices 10 determined to be used for constructing the star-type network, appropriate one of the plurality of communication devices 10 determined to be used for constructing the star-type network is set as the master unit 10A and the other communication devices 10 are set as the slave units 10B. In this regard, as a result of the master-slave determination process performed by the master-slave determination module 173, there is a case where two or more communication devices 10 are determined to be set as the master unit 10A. For example, if the master-slave determination condition 163 is set so that one communication device 10 whose battery 13 has the highest remaining capacity is set as the master unit 10A among the plurality of communication devices 10 and the remaining capacity of the batteries 13 of some of the communication devices 10 are 100%, this case may occur. In this case, it is possible to use any additional condition that one communication device 10 having a lower serial number contained in the state information 161 should be set as the master unit 10A, for example.

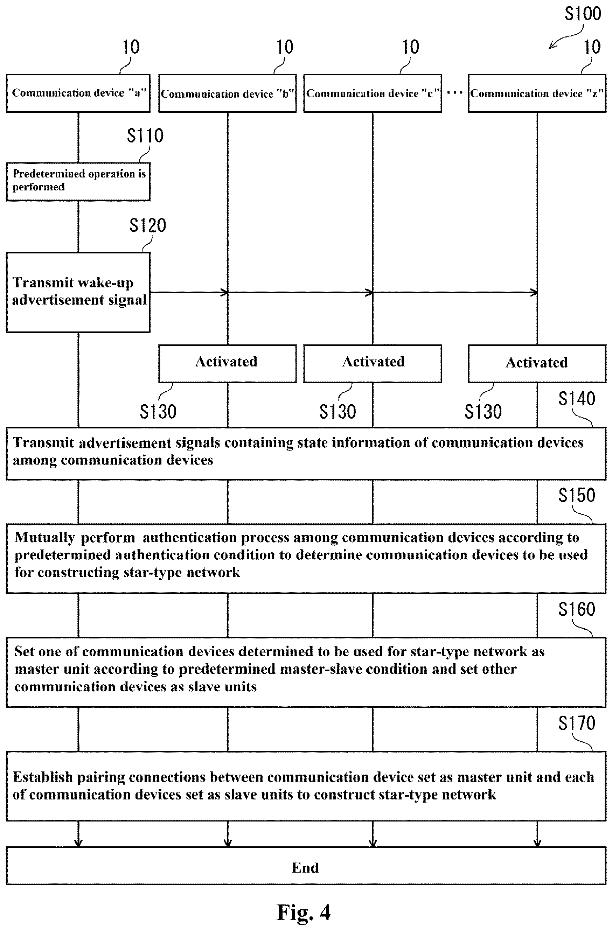

The network construction module 174 is used for establishing the pairing connections between the communication device 10 which is set as the master unit 10A by the master-slave determined module 173 and each of the communication devices 10 which are set as the slave units 10B by the master-slave determination module 173. The network construction module 174 of the communication device 10 set as the master unit 10A exchanges the advertisement signal (advertisement packet) with each of the communication devices 10 set as the slave units 10B and establishes the pairing connections with each of the communication devices 10 set as the slave units 10B to construct the star-type network. The method of the present embodiment is performed in the communication system 1 containing the plurality of communication devices 10 described above. Hereinafter, the method of the present embodiment will be described in detail with reference to Fig. 4.

### «Method S100»>

Fig. 4 is a flowchart for explaining the method according to the first embodiment of the present invention. The method S100 according to the first embodiment of the present invention shown in Fig. 4 is performed in the communication system 1 according to the first embodiment containing the plurality of communication devices 10 described above.

The method S100 starts from a state that the communication system 1 takes the state shown in Fig. 1A, that is, a state that the plurality of communication devices 10 are not connected to each other through the pairing connections and the star-type network is not constructed. First, at a step S110, the predetermined operation to construct the star-type network is performed on arbitrary one of the plurality of communication devices 10 (the communication device "a") to activate the communication device "a".

At a step S120, the communication device "a" uses the BLE communication unit 14 to wirelessly transmit wake-up advertisement signals to other communication devices 10 (communication devices "b" to "z") for waking up the communication devices "b" to "z". Although Fig. 4 shows that the transmission of the wake-up advertisement signals to the other communication devices 10 (the communication devices "b" to "z") is simultaneously performed, the transmission of the wake-up advertisement signals to the other communication devices 10 (the communication devices "b" to "z") may be performed in sequence. Each of the wake-up advertisement signals transmitted from the communication device "a" to the other communication devices 10 (the communication devices "b" to "z") at the step S120 contains a command, data, information and the like required for activating each of the other communication devices 10 (the communication devices "b" to "z").

At a step S130, each of the communication devices 10 receiving the wake-up advertisement signals from the communication device "a" is activated. After that, at a step S140, each of the activated communication devices 10 (the communication devices "a" to "z") uses the information transmitting module 171 to generate the advertisement signal containing the status information 161 thereof stored in its own memory 15. Next, the plurality of activated communication devices 10 (the communication devices "a" to "z") mutually transmit the advertisement signals to each other. At a step S150, the communication device 10 receiving the advertisement signals containing the state information 161 of other communication devices 10 uses the authentication module 172 to perform the authentication processes with respect to each of the other communication devices 10 which transmit the advertisement signals containing the state information 161 thereof to the communication device 10 based on the authentication condition 162 stored in its own memory 15. The results of the authentication processes performed by the communication device 10 with respect to the other communication devices 10 are temporarily stored in the memory 15 of the communication device 10.

At the step S150, it is determined that only the communication devices 10 for which all of the authentication processes performed by all of the other communication devices 10 succeed or only the communication devices 10 for which at least one of the authentication processes performed by the other communication devices 10 succeeds should be used for constructing the star-type network. In this regard, it can be appropriately set by the user of the communication devices 10, the administrator of the communication system 1 or the like whether only the communication devices 10 for which all of the authentication processes performed by all of the other communication devices 10 succeed or only the communication devices 10 for which at least one of the authentication processes performed by the other communication devices 10 succeeds should be used for constructing the star-type network. As described above, at the step S150, the plurality of communication devices 10 mutually perform the authentication processes with respect to each other according to the authentication condition 162 to determine the communication devices 10 to be used for constructing the star-type network.

At a step S160, each of the communication devices 10 determined to be used for constructing the star-type network at the step S150 uses the master-slave determination module 173 to perform the master-slave determination process for determining whether the communication device 10 should be set as the master unit 10A or the slave unit 10B for the star-type network according to the master-slave determination condition 163 stored in the memory 15. If one of the communication devices 10 is determined to be set as the master unit 10A at the step S160, the method S100 proceeds to a step S170.

At the step S170, the communication device 10 determined to be set as the master unit 10A at the step S160 uses the network construction module 174 to exchange the advertisement signals with each of the communication devices 10 determined to be set as the slave units 10B at the step S160 and establishes the pairing connections with each of the communication devices 10 set as the slave units 10B to construct the star-type network. When the star-type network is constructed by the master unit 10A and the plurality of slave units 10B at the step S170 and the communication system 1 shifts to the state shown in Fig. 1B, the method S100 ends.

As described above, in the method S100 and the communication system 1 of the present embodiment, by mutually performing the authentication processes among the plurality of communication devices 10 with the authentication condition 162 stored in the memory 15 of each of the communication devices 10, it is possible to quickly, easily and automatically construct the star-type network with only communication devices 10 having the predetermined characteristics.

Further, in the method S100 and the communication system 1 of the present embodiment, by performing the master-slave determination processes with the master-slave determination condition 163 stored in the memory 15 of each of the plurality of communication devices 10, it is possible to construct the star-type network so that one communication device 10 having the predetermined characteristics is set as the master unit 10A. Therefore, according to the method S100 and the communication system 1 of the present embodiment, by setting one communication device 10 having the higher performance as the master unit 10A, it is possible to wholly improve the process efficiency of the star-type network. Further, by setting one communication device 10 whose battery 13 has the largest remaining capacity as the master unit 10A, it is possible to reduce the risk of the unintentional shutdown of the star-type network due to the battery depletion of the master unit 10A.

### <Second embodiment

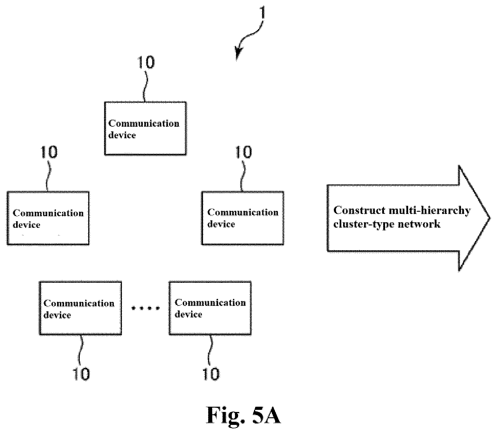

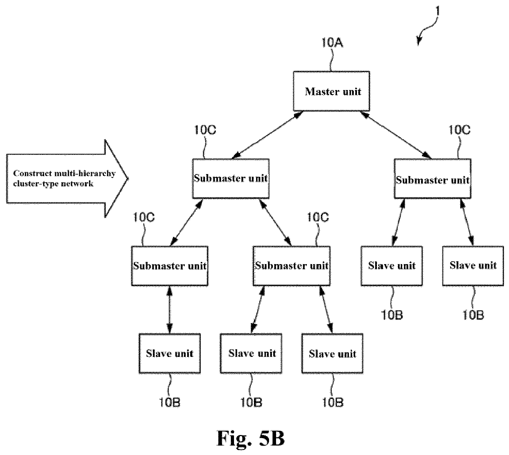

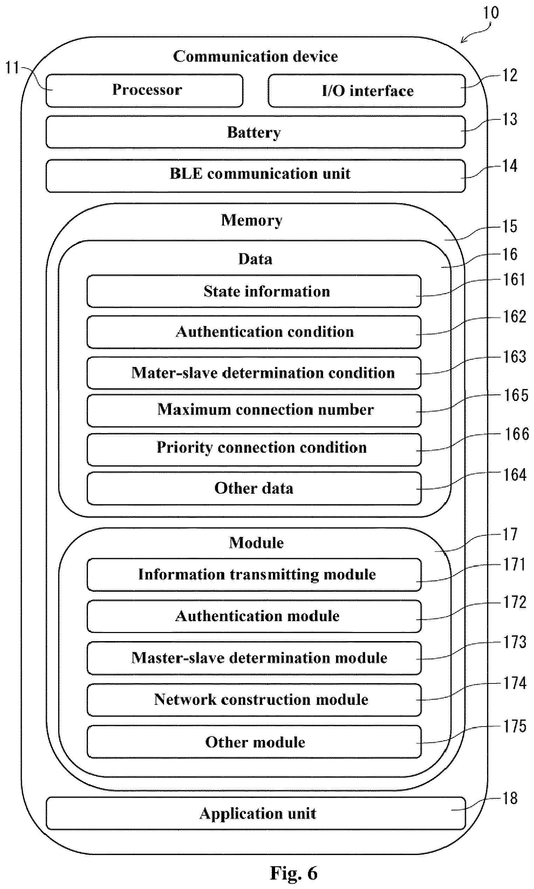

Next, a method and a communication system according to a second embodiment of the present invention will be described in detail. First, the communication system according to the second embodiment of the present invention will be described in detail with reference to Figs. 5 to 6. Fig. 5 is a diagram schematically showing a concept of the method according to the second embodiment of the present invention. Fig. 6 is a block diagram of the communication device used in the method and the communication system according to the second embodiment of the present invention.

Hereinafter, the method and the communication system of the second embodiment will be described by placing emphasis on the points differing from the method and the communication system of the first embodiment with the same matters being omitted from the description. The method and the communication system of the second embodiment are used for automatically constructing a multi-hierarchy cluster-type network with the plurality of communication devices.

Similar to the first embodiment, the communication system 1 according to the second embodiment of the present invention contains the plurality of communication devices 10 as shown in Fig. 5A. In a state shown in Fig. 5A, each of the plurality of communication devices 10 is not wirelessly connected to each other. Further, the user of the communication devices 10, the administrator of the communication system 1 or the like does not set which of the plurality of communication devices 10 should be the master unit 10A in advance.

According to the method of the second embodiment of the present invention explained in the following description, the multi-hierarchy cluster-type network is constructed so that one of the plurality of communication devices 10 is set as the master unit 10A according to the predetermined master-slave condition as shown in Fig. 5B. The term of "multi-hierarchy cluster-type network" used in the specification refers to a network topology in which a plurality of submaster units 10C are connected to one master unit 10A and a plurality of other submaster units 10C or slave units 10B are connected to each of the plurality of submaster units 10C as shown in Fig. 5B. Further, in the multi-hierarchy cluster-type network, the plurality of submaster units 10C belonging to the same hierarchy level are not directly connected to each other and the plurality of slave units 10B belonging to the same hierarchy level are not directly connected to each other. In the communication system 1 taking the state shown in Fig. 5B, the master unit 10A is connected to each of the plurality of submaster units 10C through the pairing connection according to the BLE standard. Similarly, each of the plurality of submaster units 10C is connected to each of the plurality of slave units 10B or each of the plurality of submaster units 10C belonging to a hierarchy level lower than the hierarchy level thereof by one through the pairing connection according to the BLE standard.

As shown in Fig. 5B, the master unit 10A forms a primary hierarchy, the plurality of submaster units 10C directly connected to the master unit 10A through the pairing connections form a secondary hierarchy and the submaster units 10C or the slave units 10B directly connected to each of the submaster unit 10C belonging to the secondary hierarchy form a tertiary hierarchy in the multi-hierarchy cluster-type network. As described above, when the hierarchy level to which the master unit 10A belongs is defined as the primary hierarchy in the multi-hierarchy cluster-type network, the hierarchy level to which the submaster units 10C or the slave units 10B belong is determined according to the number of relays (submaster units 10C) until reaching the master unit10A in the multi-hierarchy cluster-type network. The submaster units 10C or the slave units 10B belonging to each hierarchy level of the multi-layer cluster-type network transmit and receive data from the master unit 10A through one or more pairing connections.

The master unit 10A individually transmits the commands to the plurality of submaster units 10C and the plurality of slave units 10B. The command transmitted from the master unit 10A to each of the submaster units 10C and the slave units 10B contains an instruction related to a function (service) to be provided by each of the submaster units 10C and the slave units 10B. Each of the submaster units 10C and the slave units 10B receiving the commands from the master unit 10A performs a process according to the received command to provide the predetermined function (service). Therefore, the master unit 10A can collectively control the plurality of submaster units 10C and the plurality of slave units 10B.

### «Communication devices 10»

The communication device 10 of the present embodiment shown in Fig. 6 functions as any one of the master unit 10A, the submaster unit 10C and the slave unit 10B in the multi-hierarchy cluster-type network. When the communication device 10 functions as the master unit 10A, the master unit 10A transmits the commands to the plurality of communication devices 10 functioning as the submaster units 10C or the slave units 10B through one or more pairing connections to collectively control the plurality of submaster units 10C and the plurality of slave units 10B.

When the communication device 10 functions as the submaster unit 10C, the submaster unit 10C receives the command for itself from the master unit 10A and provide the predetermined function (service) by performing the processing according to the received command. On the other hand, when the submaster unit 10C receives the command transmitted from the master unit 10A to the other submaster unit 10C or the slave unit 10B belonging to a hierarchy level lower than the hierarchy level thereof, the submaster unit 10C functions as a relay device for relaying the command from the master unit 10A to the appropriate submaster unit 10C or the appropriate slave unit 10B. When the communication device 10 functions as the slave unit 10B, the communication device 10 receives the command for itself from the master unit 10A through one or more pairing connections and performs the processing according to the received command to provide the predetermined function (service).

The communication device 10 of the present embodiment shown in Fig. 6 has the same configuration as the configuration of the communication device 10 of the first embodiment except that the memory 15 further stores a maximum connection number 165 and a priority connection condition 166 and the communication device 10 is configured so that the number of other communication devices 10 simultaneously connected to the communication device 10 through the pairing connections does not exceed the maximum connection number set in advance. Description for the same elements as those of the communication device 10 of the first embodiment is omitted.

The maximum connection number 165 stored in the memory 15 is an arbitrary integer parameter, which is equal to or larger than two, corresponding to the number of other communication devices 10 which can be simultaneously connected to the communication device 10 through the pairing connections. Namely, in the present embodiment, the communication device 10 is configured so that the number of other communication devices 10 which are simultaneously connected to the communication device 10 through the pairing connections does not exceed the maximum connection number 165 of the communication device 10. The maximum connection number 165 may be written in the memory 15 in a non-rewritable manner at the time of manufacturing or shipping the communication device 10. Alternatively, the maximum connection number 165 may be written in the memory 15 in a rewritable matter in response to a signal input to the communication device 10 via the I/O interface 12.

The priority connection condition 166 stored in the memory 15 is used for assigning a priority for the pairing connection with the communication device 10 to each of the other communication devices 10 when there are other communication devices 10 which can establish the pairing connections with the communication device 10. As described above, in the present embodiment, an upper limit of the number of other communication devices 10 which can be simultaneously connected to the communication device 10 through the pairing connections is the maximum connection number 165. Therefore, when the number of other communication devices 10 which can be connected to the communication device 10 through the pairing connections exceeds the maximum connection number 165 of the communication device 10, the communication device 10 needs to determine which other communication devices 10 should be connected to the communication device 10 through the pairing connections. Thus, the communication device 10 uses the priority connection condition 166 to assign priorities to the other communication devices 10 which can be connected to the communication device 10 through the pairing connections and establishes the pairing connections with the other communication devices 10 in sequence according to the priorities assigned to the other communication devices 10.

Although the priority connection condition 166 is not particularly limited as long as the communication device 10 can determine the priority for each of the other communications 10 which can be connected to the communication device 10 through the pairing connections based on the priority connection condition 166, the priority connection condition 166 may contain (a) a positional condition of the other communication device 10, (b) a condition related to the function provided by the other communication device 10, (c) a condition related to the performance of the other communication device 10, (d) a condition related to the battery 13 of the other communication device 10 and/or any combinations of these conditions (a) to (d).

For example, in a case where (a) the positional condition of the other communication device 10 is set as the priority connection condition 166, the priorities are respectively assigned to the plurality of other communication devices 10 based on the received signal strength (RSSI) of the advertisement signal received from each of the other communication devices 10. In this case, the priorities are respectively assigned to the plurality of other communication devices 10 in a descending order of the received signal strengths of the advertisement signals, that is, in a short distance order from the communication device 10. Thus, the pairing connections between the communication device 10 and each of the other communication devices 10 are established in a descending order of the separation distance from the communication device 10.

Further, in a case where (b) the condition related to the function provided by the other communication device 10 is set as the priority connection condition 166, the priorities are respectively assigned to the plurality of other communication devices 10 based on the function provided by each of the other communication devices 10. For example, higher priorities are assigned to other communication devices 10 which can provide a specific function and lower priorities are assigned to remaining communication devices 10 which cannot provide the specific function. In this case, the other communication devices 10 which can provide the specific function are preferentially connected to the communication device 10 through the pairing connections.

In addition, in a case where (c) the condition related to the performance of the other communication device 10 is set as the priority connection condition 166, the priorities are respectively assigned to the plurality of other communication devices 10 based on the performance of each of the other communication devices 10 (for example, the arithmetic processing capability of the processor 11, the device version of the other communication device 10 or the firmware version of the other communication device) derived from the state information 161 contained in the advertisement signal received from each of the other communication devices 10. For example, in a case where the arithmetic processing capability of the processor 11 is set as the priority connection condition 166, the priorities are respectively assigned to the plurality of other communication devices 10 in a descending order of the arithmetic processing capability of the processor 11. Thus, the pairing connections between the communication device 10 and each of the other communication devices 10 are established in the descending order of the arithmetic processing capability of the processor 11 of each of the other communication devices 10. In a case where the device version or the firmware version of the other communication device 10 is set as the priority connection condition 166, the priorities are respectively assigned to the plurality of other communication devices 10 in a descending order of the device version or the firmware version of each of the other communication devices 10. Thus, the pairing connections between the communication device 10 and each of the other communication devices 10 are established in the descending order of the device version or the firmware version of each of the other communication devices 10.

In addition, in a case where (d) the condition related to the battery 13 of the other communication device 10 is set as the priority connection condition 166, the priorities are respectively assigned to the plurality of other communication devices 10 based on the remaining capacity of the battery 13 of each of the other communication devices 10 derived from the state information 161 contained in the advertisement signal received from each of the other communication devices 10. In this case, the priorities are respectively assigned to the plurality of other communication devices 10 in a descending order of the remaining capacity of the battery 13 of each of the other communication devices 10. Thus, the pairing connections between the communication device 10 and each of the other communication devices 10 are established in the descending order of the remaining capacity of the battery 13 of each of the other communication devices 10.

Further, the priority connection condition 166 may be any combinations of two or more of the above-described conditions (a) to (d). In this case, a predetermined calculation formula is used for calculating a priority score for each of the other communication devices 10 based on the above-described conditions (a) to (d) and the priorities are respectively assigned to the plurality of other communication devices 10 in a descending order of the calculated priority scores for the other communication devices 10. The priority connection condition 166 may be written in the memory 15 in a non-rewritable manner at the time of manufacturing or shipping the communication device 10. Alternatively, the priority connection condition 166 may be written in the memory 15 in a rewritable manner in response to a signal input to the communication device 10 via the I/O interface 12.

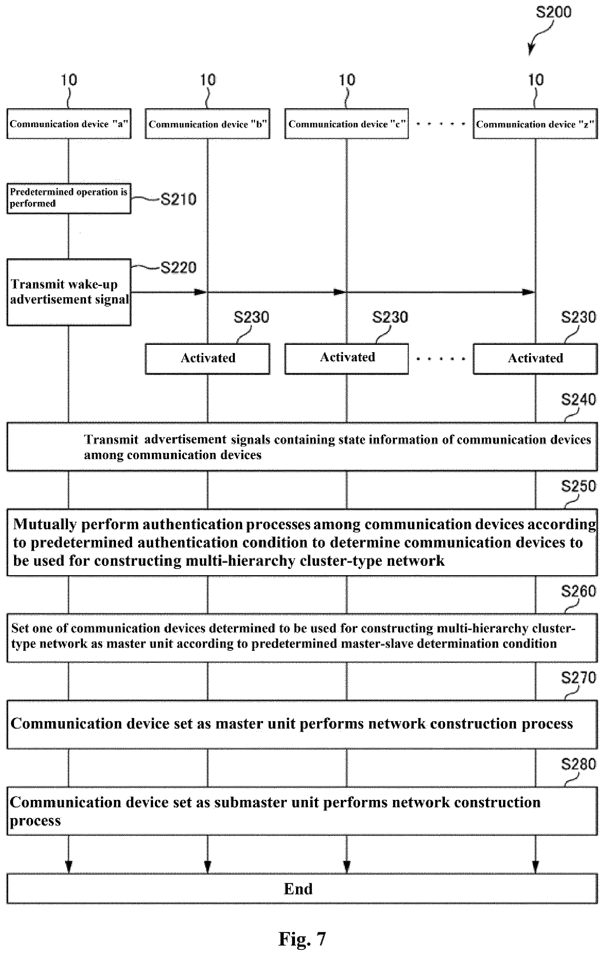

As described above, in the present embodiment, the communication device 10 respectively assigns the priorities to the plurality of other communication devices 10 which can be connected to the communication device 10 through the pairing connections based on the priority connection condition 166 of the communication device 10 and establishes the pairing connections with each of the other communication devices 10 in the descending order of the assigned priorities. Thus, even if the number of other communication devices 10 which can be connected to the communication device 10 through the pairing connections exceeds the maximum connection number 165 of the communication device 10, the communication device 10 can determine which other communication devices 10 should be connected to the communication device 10 through the pairing connections. In the communication system 1 containing the plurality of the communication devices 10 described above, the method of the present embodiment is performed. Hereinafter, the method of the present embodiment will be described in detail with reference to Figs. 7 to 8.

### «Method S200»>

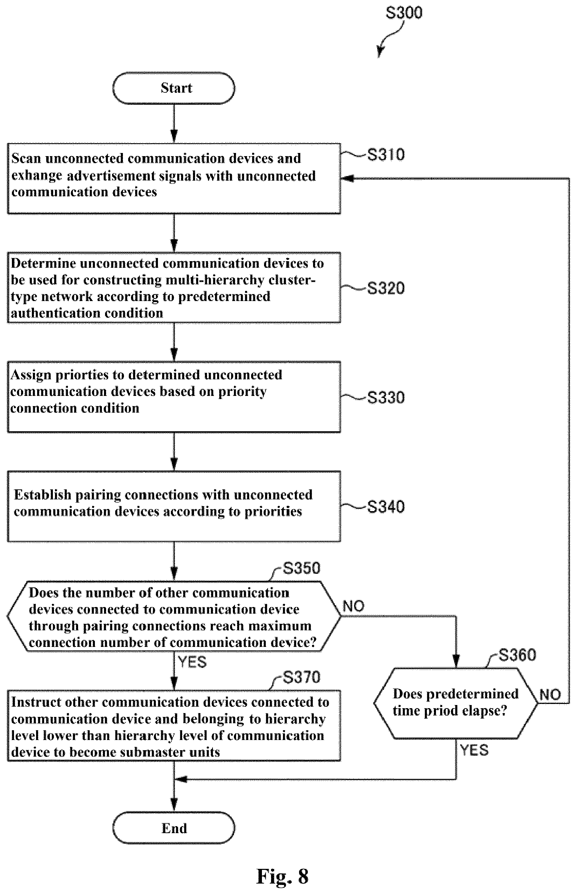

Fig. 7 is a flowchart for explaining the method according to the second embodiment of the present invention. Fig. 8 is a flowchart for explaining a network construction process performed in the method shown in Fig. 7. The method S200 according to the second embodiment of the present invention shown in Fig. 7 is performed in the communication system 1 according to the second embodiment containing the plurality of communication devices 10 described above.

The method S200 starts from a state that the communication system 1 takes a state shown in Fig. 5A, that is, a state that the plurality of communication devices 10 are not connected to each other through the pairing connections and the multi-hierarchy cluster-type network is not established. First, at a step S210, the predetermined operation is performed on arbitrary one of the plurality of communication devices 10 (the communication device "a") in order to construct the multi-hierarchy cluster-type network and then the communication device "a" is activated.

At a step S220, the communication device "a" uses the BLE communication unit 14 to wirelessly transmit wake-up advertisement signals to other communication devices 10 (communication devices "b" to "z") for waking up the communication devices "b" to "z". Although Fig. 7 shows that the transmission of the wake-up advertisement signals to the other communication devices 10 (the communication devices "b" to "z") is simultaneously performed, the transmission of the wake-up advertisement signals to the other communication devices 10 (the communication devices "b" to "z") may be performed in sequence. Each of the wake-up advertisement signals transmitted from the communication device "a" to the other communication devices 10 (the communication devices "b" to "z") at the step S220 contains a command, data, information and the like required for activating each of the other communication devices 10 (the communication devices "b" to "z").

At a step S230, each of the communication devices 10 receiving the wake-up advertisement signals from the communication device "a" is activated. After that, at a step S240, each of the activated communication devices 10 (the communication devices "a" to "z") uses the information transmitting module 171 to generate the advertisement signal containing the status information 161 thereof stored in its own memory 15. After that, the plurality of activated communication devices 10 (the communication devices "a" to "z") mutually transmit the advertisement signals to each other. At a step S250, the communication device 10 receiving the signals containing the state information 161 of other communication devices 10 uses the authentication module 172 to perform the authentication processes with respect to each of the other communication devices 10 which transmit the advertisement signals containing the state information 161 thereof to the communication device 10 based on the authentication condition 162 stored in its own memory 15. The results of the authentication processes performed by the communication device 10 with respect to the other communication devices 10 are temporarily stored in the memory 15 of the communication device 10.

At the step S250, it is determined that only the communication devices 10 for which all of the authentication processes performed by all of the other communication devices 10 succeed or only the communication devices 10 for which at least one of the authentication processes performed by the other communication devices 10 succeeds should be used for constructing the multi-hierarchy cluster-type network. In this regard, it can be appropriately set by the user of the communication devices 10, the administrator of the communication system 1 or the like whether only the communication devices 10 for which all of the authentication processes performed by all of the other communication devices 10 succeed or only the communication devices 10 for which at least one of the authentication processes performed by the other communication devices 10 succeeds should be used for constructing the multi-hierarchy cluster-type network. As described above, at the step S250, the plurality of communication devices 10 mutually perform the authentication processes with respect to each other according to the authentication condition 162 to determine the communication devices 10 to be used for constructing the multi-hierarchy cluster-type network.

At a step S260, each of the communication devices 10 determined to be used for constructing the multi-hierarchy cluster-type network at the step S250 uses the master-slave determination module 173 to perform the master-slave determination process for determining whether the communication device 10 should be set as the master unit 10A or the slave unit 10B for the multi-hierarchy cluster-type network according to the master-slave determination condition 163 stored in the memory 15. If one of the communication devices 10 is determined to be set as the master unit 10A at the step S260, the method S200 proceeds to a step S270.

At the step S270, the communication device 10 determined to be set as the master unit 10A at the step S260 (hereinafter, referred to as a "master unit 10A") performs a network construction process S300 shown in Fig. 8. Hereinafter, the network construction process S300 will be described in detail with reference to Fig. 8.

At a step S310, the communication device 10 performing the network construction process S300 (in the following description for the network construction process S300, the communication device 10 performing the network construction process S300 is simply referred to as a "communication device 10") uses the network construction module 174 to scan other communication devices 10 to find out one or more unconnected communication devices 10 which are not connected to the multi-hierarchy cluster-type network. After that, the communication device 10 uses the information transmitting module 171 to exchange the advertisement signals containing the state information 161 thereof with each of the unconnected communication devices 10 found by the scan.

At a step S320, the communication device 10 performs the authentication process with respect each of the unconnected communication devices 10 which have exchanged the advertisement signals with the communication device 10 at the step S310 based on the authentication condition 162 stored in the memory 15 of the communication device 10. At the step S320, it is determined that only the unconnected communication devices 10 for which the authenticating process performed by the communication device 10 succeed are used for constructing the multi-hierarchy cluster-type network. After that, at a step S330, the communication device 10 calculates the priorities for the plurality of unconnected communication devices 10 from the status information 161 contained in the advertisement signal of each of the unconnected communication devices 10 determined to be used for constructing the multi-hierarchy cluster-type network at the step S320 based on the priority connection condition 166 stored in the memory 15 of the communication device 10. Next, the communication device 10 respectively assigns the calculated priorities to the plurality of unconnected communication devices 10.

At a step S340, the communication device 10 uses the network construction module 174 to establish the pairing connections with the unconnected communication devices 10 in the descending order of the priorities assigned to the unconnected communication devices 10 at the step S330. The other communication devices 10 connected to the communication device 10 through the pairing connections belong to a hierarchy level lower than the hierarchy level of the communication device 10 by one. In this regard, the establishment of the pairing connections between the communication device 10 and each of the unconnected communication devices 10 at the step S340 is terminated when the number of other communication devices 10 simultaneously connected to the communication device 10 through the pairing connections reaches the maximum connection number 165 stored in the memory 15 of the communication device 10 or when the communication device 10 is connected to all of the other communication devices 10 to which the priorities are assigned at the step S330 through the paring connections. After that, the process S300 proceeds to a step S350.

At the step S350, the communication device 10 determines whether or not the number of other communication devices 10 simultaneously connected to the communication device 10 through the pairing connections reaches the maximum connection number 165 stored in the memory 15 of the communication device 10. If the number of other communication devices 10 simultaneously connected to the communication device 10 through the pairing connections does not reach the maximum connection number 165 of the communication device 10, the process S300 proceeds to a step S360. At the step S360, the communication device 10 determines whether or not a predetermined time period elapses since the network construction process S300 is started. If the predetermined time period does not elapse since the network construction process S300 is started, the process S300 returns to the step S310 and the steps S310 to S350 are repeatedly performed. On the other hand, at the process S360, if the predetermined period elapses since the network construction process S300 is started, the network construction process S300 ends. In this regard, the predetermined time period used in this determination at the step S360 can be arbitrarily set by the user of the communication devices 10, the administrator of the communication systems 1 or the like.

If the number of other communication devices 10 simultaneously connected to the communication device 10 through the pairing connections reaches the maximum connection number 165 of the communication device 10 at the step S350, the process S300 proceeds to a step S370. At the step S370, the communication device 10 instructs each of the other communication devices 10 simultaneously connected to the communication device 10 through the pairing connections and belonging to the hierarchy level lower than the hierarchy level of the communication device 10 by one to become a submaster unit 10C belonging to the hierarchy level lower than the hierarchy level of the communication device 10. When each of the other communication devices 10 belonging to the hierarchy level lower than the hierarchy level of the communication device 10 by one becomes the submaster unit 10C of the hierarchy level lower than the hierarchy level of the communication device 10, the process at the step S370 ends and the network construction process S300 ends.

Referring back to Fig. 7, at a step S270, the master unit 10A performs the network construction process S300 described in detail with reference to Fig. 8. When the master unit 10A performs the network construction process S300, the communication system 1 takes either one of a state in which the submaster units 10C of the same number as the maximum connection number 165 of the master unit 10A are connected to the master unit 10A through the pairing connections and a state in which the other communication devices 10 of a number less than the maximum connection number 165 of the master unit 10A are connected to the master unit 10A through the pairing connections (in this case, the other communication devices 10 connected to the master unit 10A through the pairing connections become the slave units 10B).

If the communication system 1 takes the state in which the submaster units 10C of the same number as the maximum connection number 165 of the master unit 10A are connected to the master unit 10A through the pairing connections, each of the submaster units 10C connected to the master unit 10A through the pairing connections performs the network construction process S300 described in detail with reference to Fig. 8 at a step S280. In this regard, if the communication system 1 takes the state in which the slave units 10B of a number less than the maximum connection number 165 of the master unit 10A are connected to the master unit 10A through the pairing connections, that is, in a case where the step S370 is not performed when the master unit 10A performs the network construction process S300 at the step S270 and all of the slave units 10B connected to the master unit 10A through the pairing connections do not receive the instructions to become the submaster units 10C belonging to the hierarchy level lower than the hierarchy level of the communication device 10 by one, the submaster units 10C do not exist in the communication system 1. In this case, the step S280 is not performed. Thus, since the communication system 1 in this case contains the master unit 10A and the slave units 10B directly connected to the master unit 10A through the pairing connections, the communication system 1 in this case is substantially equal to the star-type network.

At the step S280, each of the submaster units 10C connected to the master unit 10A through the pairing connections so as to directly hang down from the master unit 10A performs the network construction process S300. Further, when the step S370 of the network construction process S300 is performed by each of the submaster units 10C at the step S280, other submaster units 10C belonging to a hierarchy level lower than the hierarchy level of the submaster unit 10C which performs the step S370 of the network construction process S300 are connected to the submaster unit 10C through the pairing connections so as to directly hang down from the submaster unit 10C. Each of the other submaster units 10C belonging to the hierarchy level lower than the hierarchy level of the submaster unit 10C by one and connected to the submaster unit 10C through the pairing connections so as to directly hang down from the submaster unit 10C similarly performs the network construction process S300 at the step S280. Thus, each time when a plurality of new submaster units 10C belonging to a next lower hierarchy level are connected to the submaster unit 10C performing the network construction process S300 so as to directly hang down from the submaster unit 10C, the network construction process S300 is performed by each of the submaster units 10C which are newly connected through the pairing connections.

Therefore, the execution of the network construction process S300 by the submaster unit 10C at the step S280 is performed by each of the submaster units 10C until all of the submaster units 10C perform the network construction process S300 and new submaster units 10C are not connected through the pairing connections any more. In other words, the network construction process S300 is performed by each of the submaster units 10C until all of the communication devices 10 determined to be used for constructing the multi-hierarchy cluster-type network based on the authentication condition 162 are connected to either one of the master unit 10A and any one of the plurality of submaster units 10C.

As a result, the number of hierarchy levels of the multi-hierarchy cluster-type network automatically increases depending on the number of communication devices 10 determined to be used for constructing the multi-hierarchy cluster-type network. Therefore, the number of hierarchy levels of the multi-hierarchy cluster-type network constructed by the method S200 of the present embodiment dynamically changes depending on the number of communication devices 10 determined to be used for constructing the multi-hierarchy cluster-type network. In this regard, the number of communication devices 10 determined to be used for constructing the multi-hierarchy cluster-type network can change according to the setting of the authentication condition 162. Accordingly, the user of the present communication system 1 and the method S200 of the present invention do not need to specify the number of hierarchy levels of the multi-hierarchy cluster-type network with taking account of the number of communication devices 10 used for constructing the multi-hierarchy cluster-type network. As described above, according to the communication system 1 and the method S200 of the present embodiment, even if the number of hierarchy levels of the multi-hierarchy cluster-type network is not specified with taking account of the number of communication devices 10 used for constructing the multi-hierarchy cluster-type network, it is possible to automatically construct the multi-hierarchy cluster-type network having an appropriate number of hierarchy levels according to the setting of the authenticating condition 162 of the communication devices 10.

When the number of other communication devices 10 connected to each of the submaster units 10C becomes less than the maximum connection number 165 of each of the submaster units 10C and the number of hierarchy levels of the multi-hierarchy cluster-type network does not increase any more, the construction of the multi-hierarchy cluster-type network at the step S280 is completed and then the method S200 ends.

As described above, according to the method S200 and the communication system 1 of the present embodiment, by performing the master-slave determination process with the master-slave determination conditions 163 stored in the memory 15 of each of the communication devices 10, it is possible to construct the multi-hierarchy cluster-type network in which one communication device 10 having the predetermined characteristics is set as the master unit 10A. Therefore, according to the method S200 and the communication system 1 of the present embodiment, it is possible to improve the processing efficiency of the multi-hierarchy cluster-type network as a whole by setting one communication device 10 having the higher performance as the master unit 10A. Alternatively, it is possible to reduce the risk of unintentional shutdown of the multi-hierarchy cluster-type network due to the battery depletion of the master unit 10A by setting one communication device 10 having the largest battery remaining capacity as the master unit 10A.

### <Third embodiment

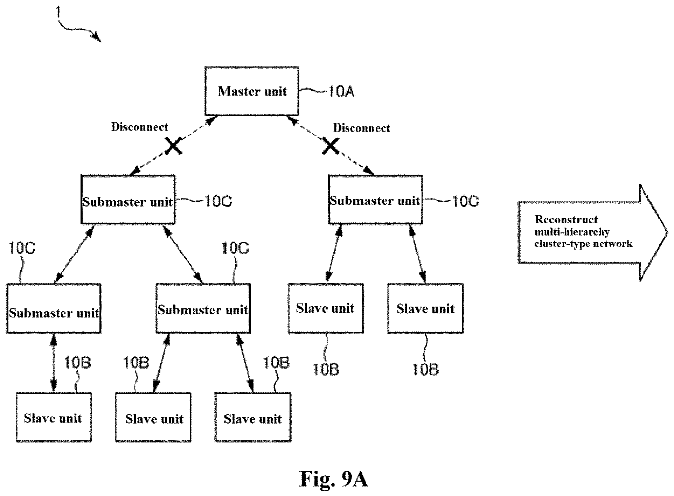

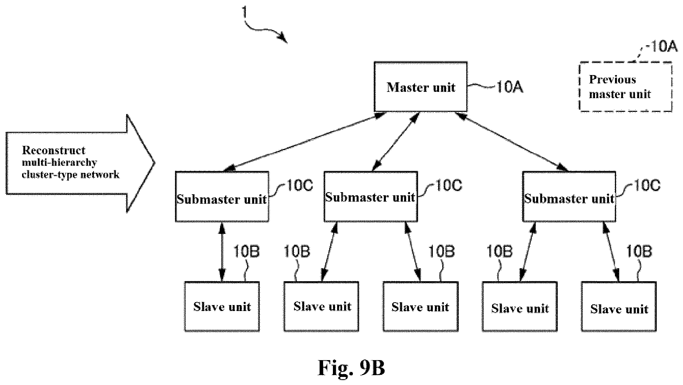

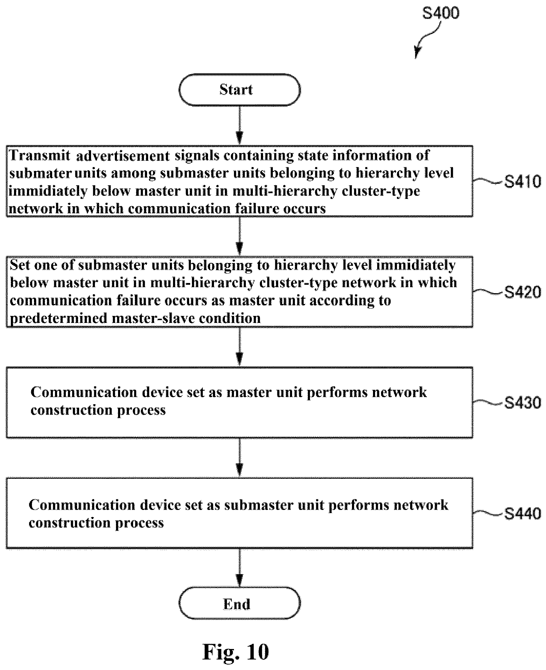

Next, a method and a communication system according to a third embodiment of the present invention will be described in detail with reference to Figs. 9 to 10. Fig. 9 is a diagram schematically showing a concept of the method according to the third embodiment of the present invention. Fig. 10 is a flowchart showing the method according to the third embodiment of the present invention.

Hereinafter, the method and the communication system of the third embodiment will be described by placing emphasis on the points differing from the method and the communication system of the second embodiment with the same matters being omitted from the description. The method and the communication system according to the third embodiment are used for reconstructing the multi-hierarchy cluster-type network when a communication failure is caused in the multi-hierarchy cluster-type network by any reason such as a power-down of the master unit 10A due to depletion of the battery 13 in the multi-hierarchy cluster-type network.

As shown in Fig. 9A, a communication system 1 according to the third embodiment of the present invention contains the plurality of communication devices 10 which connected to each other through the pairing connections to form the multi-hierarchy cluster-type network. Each of the communication devices 10 in the communication system 1 of the present embodiment has the same configuration as the configuration of the communication device 10 of the second embodiment described above.

As shown in Fig. 9A, it is assumed that the master unit 10A of the multi-hierarchy cluster-type network cannot perform the communication due to any reason such as the power-down of the master unit 10A caused by the depletion of the battery 13 and a communication failure occurs in the multi-hierarchy cluster-type network. In this situation, according to the method of the third embodiment of the present invention, it is possible to reconstruct the multi-hierarchy cluster-type network so that the master unit 10A causing the communication failure is excluded.

When the communication failure is caused in the multi-hierarchy cluster-type network by an event that the master unit 10A of the multi-hierarchy cluster-type network powers down due to the depletion of the battery 13, a method S400 of the present embodiment is started. Hereinafter, the method S400 of the present embodiment will be described in detail with reference to Fig. 10.

Fig. 10 shows a flow chart of the method S400. When the method S400 is started, first, all of the pairing connections among the communication devices 10 constructing the multi-hierarchy cluster-type networks in which the communication failure has occurred are disconnected at a step S410. After that, each of the submaster units 10C which had belonged to the hierarchy level immediately below the hierarchy level of the master unit 10A (i.e., the secondary hierarchy) of the multi-hierarchy cluster-type network in which the communication failure has occurred uses the information transmitting module 171 to generate the advertisement signal containing the state information 161 thereof stored in it own memory 15 and mutually transmit the advertisement signals with respect to each other.

At a step S420, each of the submaster units 10C mutually transmitting the advertisement signals with respect to each other at the step S410 uses the master-slave determination module 173 to perform the master-slave determination process for determining whether the submaster unit 10C should be set as a new master unit 10A or the slave unit 10B in the multi-hierarchy cluster-type network according to the master-slave determination condition 163 stored in the memory 15. After that, the communication device 10 determined to be set as the new master unit 10A at the step S420 (hereinafter, referred to as a "master unit 10A") performs the network construction process S300 described in detail with reference to Fig. 8. Since the network construction process S300 has been described in detail in the description for the method S200 of the second embodiment, the description for the network construction process S300 is omitted here. After that, similarly to the step S280 of the method S200 of the second embodiment, at a step S440, each of the communication devices 10 instructed to become the submaster units 10C at the step S370 of the network construction process S300 performed at the step S430 performs the network construction process S300. With this method S400, it is possible to construct a new multi-hierarchy cluster-type network excluding the previous master unit 10A which causes the communication failure as shown in Fig. 9B.

In the method S400 of the present embodiment, since candidates for the new master unit 10A are limited to the plurality of submaster units 10C which had belonged to the hierarchy level immediately below the hierarchy level of the master unit 10A (i.e., the secondary hierarchy) in the multi-hierarchy cluster-type network in which the communication failure has occurred, it is possible to reduce a data traffic amount and a data processing amount of data communication required for quickly determining the communication device 10 (the submaster unit 10C) to be set as the new master unit 10A. As a result, it is possible to quickly reconstruct the multi-hierarchy cluster-type network.

### <Fourth embodiment

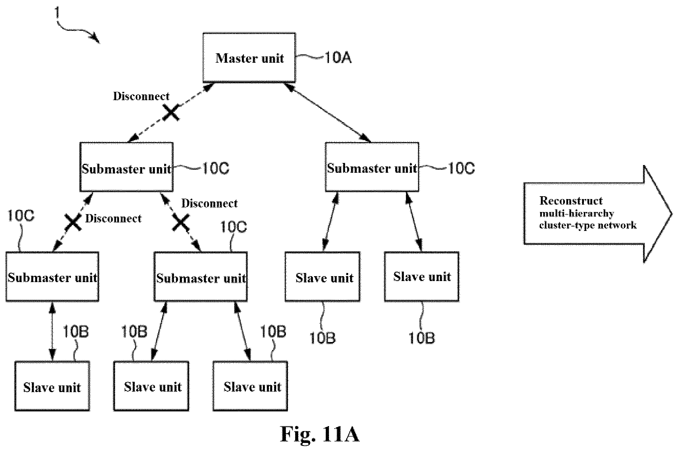

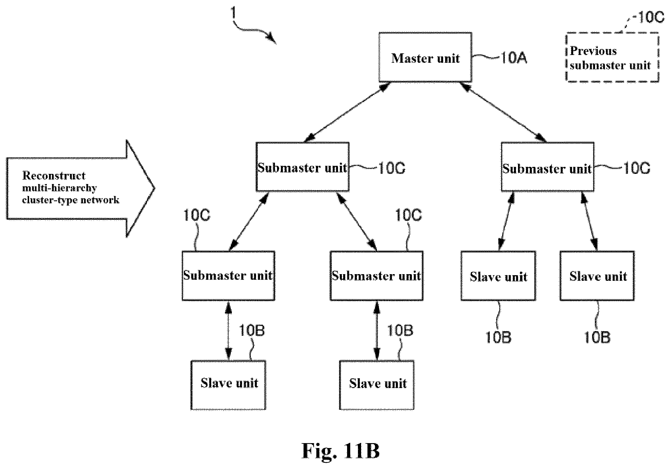

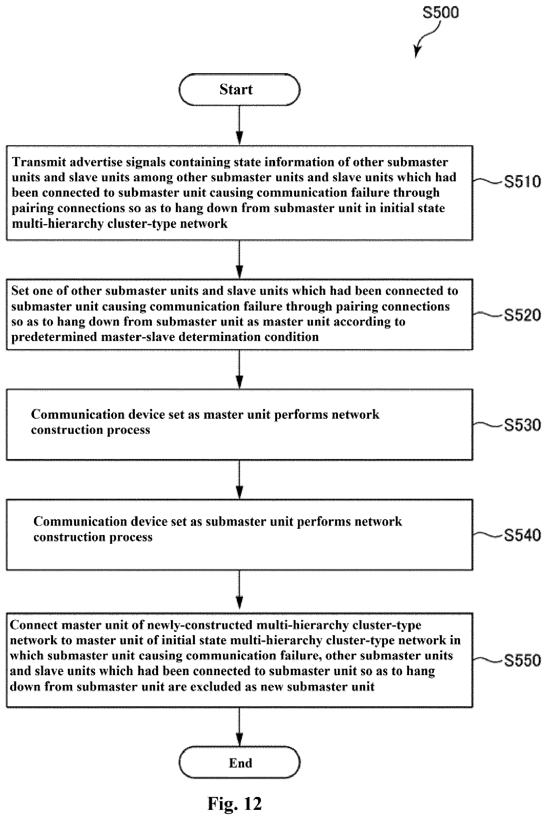

Next, a method and a communication system according to a fourth embodiment of the present invention will be described in detail with reference to Figs. 11 to 12. Fig. 11 is a diagram schematically showing a concept of the method according to the fourth embodiment of the present invention. Fig. 12 is a flowchart showing the method according to the fourth embodiment of the present invention.

Hereinafter, the method and the communication system of the fourth embodiment will be described by placing emphasis on the points differing from the method and the communication system of the second embodiment with the same matters being omitted from the description. The method and communication system of the fourth embodiment are used for reconstructing the multi-hierarchy cluster-type network when the communication failure is caused in the multi-hierarchy cluster-type network by any reason such as a power-down of the submaster unit 10C belonging to any one of the hierarchy levels due to the depletion of the battery 13 of the submaster unit 10C.

As shown in Fig. 11A, a communication system 1 according to the fourth embodiment of the present invention contains the plurality of communication devices 10 connected to each other through the pairing connections to form the multi-hierarchy cluster-type network. Each of the communication devices 10 in the communication system 1 of the present embodiment has the same configuration as the configuration of the communication device 10 of the second embodiment described above.

As shown in Fig. 11A, it is assumed that the submaster unit 10C belonging to any one of the hierarchy levels of the multi-hierarchy cluster-type network cannot perform the communication due to any reason such as the power-down of the submaster unit 10C caused by the depletion of the battery 13 and a communication failure occurs in the multi-hierarchy cluster-type network. In this regard, the multi-hierarchy cluster-type network shown in Fig. 11A is hereinafter referred to as an "initial state multi-hierarchy cluster-type network". In this situation, according to the method of the fourth embodiment of the present invention, it is possible to reconstruct a new multi-hierarchy cluster-type network so that the submaster unit 10C causing the communication failure is excluded.

When the communication failure is caused in the multi-hierarchy cluster-type network by an event that the submaster unit 10C belonging to any one of the hierarchy levels of the multi-hierarchy cluster-type network powers down due to the depletion of the battery 13, a method S500 of the present embodiment is started. Hereinafter, the method S500 of the present embodiment will be described in detail with reference to Fig. 12.

Fig. 12 shows the flow chart of the method S500. When the method S500 is started, first, at a step S510, all of the pairing connections between the submaster unit 10C causing the communication failure and each of the other submaster units 10C and the slave units 10B connected to the submaster unit 10C through the pairing connections so as to hang down from the submaster unit 10C are disconnected in the initial state multi-hierarchy cluster-type network. On the other hand, the pairing connections among the master unit 10A, the other submaster units 10C and the slave units 10B which are not connected to the submaster unit 10C causing the communication failure so as to hang down from the submaster unit 10C are not disconnected in the initial state multi-level cluster-type network. Thus, first, the submaster unit 10C causing the communication failure and all of the other submaster units 10C and the slave units 10B connected to the submaster unit 10C so as to hang down from the submaster unit 10C are excluded from the initial state multi-hierarchy cluster-type network. As a result, a first multi-hierarchy cluster-type network is obtained. After that, except the submaster unit 10C causing the communication failure, each of the other submaster units 10C and the slave units 10B which had been connected to the submaster unit 10C through the pairing connections so as to hang down from the submaster unit 10C causing the communication failure generates the advertisement signal containing the state information 161 thereof stored in its own memory 15 and mutually transmits the advertisement signal with respect to each other.

At a step S520, each of the submaster units 10C and the slave units 10B mutually transmitting the advertisement signals at the step S510 uses the master-slave determination module 173 to perform the master-slave determination process for determining whether the submaster unit 10C or the slave unit 10B should be set as the master unit 10A or the slave unit 10B in a newly-constructed multi-hierarchy cluster network (referred to as a "second multi-hierarchy cluster network") according to the master-slave determination condition 163 stored in its own memory 15. After that, the communication device 10 determined to be set as the master unit 10A in the second multi-hierarchy cluster-type network at the step S520 performs the network construction process S300 described in detail with reference to Fig. 8 at a process S530. Since the network construction process S300 has been described in detail in the description for the method S200 of the second embodiment, the description for the network construction process S300 is omitted here. After that, at a step S540, similarly to the step S280 of the method S200 of the second embodiment, each of the communication devices 10 instructed to become the submaster units 10C at the step S370 of the network construction process S300 performed at the step S530 performs the network construction process S300.

With this configuration, it is possible to construct the second multi-hierarchy cluster-type network with the submaster units 10C and the slave units 10B which had been connected to the submaster unit 10C causing the communication failure through the pairing connections so as to hang down from the submaster unit 10C causing the communication failure in the initial state multi-hierarchy cluster-type network. In this state, the communication system 1 contains the first multi-hierarchy cluster-type network (i.e., a multi-hierarchy cluster-type network in which the submaster unit 10C causing the communication failure, the other submaster units 10C and the slave units 10B which had been connected to the submaster unit 10C causing the communication failure so as to hang down from the submaster unit 10C are excluded from the initial state multi-hierarchy cluster-type network) and the second multi-hierarchy cluster-type network (i.e., a multi-hierarchy cluster-type network constructed from the submaster units 10C and the slave units 10B which had been connected to the submaster unit 10C causing the communication failure through the pairing connections so as to hang down from the submaster unit 10C causing the communication failure).

Next, at a step S550, the master unit 10A of the second multi-hierarchy cluster-type network is connected to the master unit 10A of the first multi-hierarchy cluster-type network as a new submaster unit 10C. As a result, the first multi-hierarchy cluster-type network and the second multi-hierarchy cluster-type network are integrated with each other so that the second multi-hierarchy cluster-type network hangs down from the master unit 10A of the first multi-hierarchy cluster-type network and thus a new multi-hierarchy cluster-type network is obtained. As a result, it is possible to reconstruct the new multi-hierarchy cluster-type network excluding the previous submaster unit 10C causing the communication failure as shown in Fig. 11B.

According to the method S500 of the present embodiment, the second multi-hierarchy cluster-type network is constructed from only the plurality of submaster units 10C and the slave units 10B which had been connected to the submaster unit 10C causing the communication failure so as to hang down from the submaster unit 10C causing the communication failure and the pairing connections among the communication devices 10 constructing the first multi-hierarchy cluster-type network are maintained. Therefore, it is possible to reduce a data traffic amount and a data processing amount of data communication required for reconstructing the new multi-hierarchy cluster-type network. Further, since the first multi-hierarchy cluster-type network and the second multi-hierarchy cluster-type network can be integrated only by connecting the master unit 10A of the second multi-hierarchy cluster-type network to the master unit 10A of the first multi-hierarchy cluster-type network as a new submaster unit 10C, it is possible to quickly reconstruct the new multi-hierarchy cluster-type network excluding the submaster unit 10C causing the communicate failure.

As described above, according to the method and the communication system of the present invention, it is possible to easily, quickly and automatically construct the desired cluster-type network so that one of the plurality of communication devices having the predetermined characteristics is set as the master unit according to the master-slave determination condition stored in the memory of each of the communication devices. Therefore, the method and the communication system of the present invention can be effectively applied to an electronic shelf label wireless network system for wirelessly and collectively controlling a large number of electronic shelf labels mounted on a shelf of a retail store such as a supermarket and containing display means such as an electronic paper or a liquid crystal display for displaying a price of each product, a bed sensor monitoring system which is used in a medical field and composed of a plurality of sensors mounted on beds and a management device, a sensor system such as a factory process monitoring system composed of a large number of sensors and a management device for monitoring each process of the factory, an LED lighting system for collectively controlling a plurality of LED lights, a game machine or toy which needs to collectively control a variety of devices, a wireless switch system for collectively turning on/off a plurality of devices and a wearable device system for collectively controlling wearable devices or biological sensors attached to a body, for example.

Although the method and the communication system of the present invention have been described above based on the illustrated embodiments, the present invention is not limited thereto. Each configuration of the present invention can be replaced with any configuration capable of performing the same function or any configuration can be added to each configuration of the present invention.

A person skilled in the art in the field and art to which this invention belongs will be able to make modifications to the configuration of the described communication system of the present invention without significantly departing from the principles, concepts, and scope of this invention, and communication systems having modified configurations are also involved within the scope of this invention.

For example, the number and types of components of the communication system shown in Figs. 1 to 3, 5 to 6, 9 and 11 are merely illustrative examples and the present invention is not necessarily limited thereto. Aspects in which any component is added or combined or any component is deleted are also within the scope of the present invention without departing from the principles and intent of the present invention. Each component of the communication system may be realized by hardware, software or a combination thereof.

In addition, the number and types of steps of the method shown in Figs. 4, 7 to 8, 10 and 12 are merely illustrative examples and the present invention is not necessarily limited thereto. Aspects in which any step is added or combined or any step is deleted without departing from the principles and intent of the present invention are also within the scope of the present invention.

Further, although the above description assumes that the communication device which is set as the master unit, the plurality of communication devices which are set as the submaster units (existing only in the multi-hierarchy cluster-type network), and the plurality of communication devices which are set as the slave units are connected to each other through the pairing connections based on the BLE standard, the present invention is not limited thereto. Aspects in which the communication device which is set as the master unit, the plurality of communication devices which are set as the submaster units (existing only in the multi-hierarchy cluster-type network), and the plurality of communication devices which are set as the slave units are connected to each other through any kind of connections similar to the pairing connection based on the BLE standard.

## Claims

1. A method (S100, S200, S300, S400) for constructing a cluster-type network with a plurality of communication devices (10), comprising:
transmitting signals containing state information (161) related to states of the plurality of communication devices (10) among the plurality of communication devices (10); and
constructing the cluster-type network,
**characterized in that**:
the cluster-type network is constructed so that one of the plurality of communication devices (10) is set as a master unit (10A) according to a predetermined master-slave determination condition (163) and based on the state information (161) of each of the plurality of communication devices (10) contained in the signals.

2. The method (S100, S200, S300, S400) as claimed in claim 1, wherein each of the plurality of communication devices (10) is driven by electric power supplied from a battery (13) included in each of the plurality of communication devices (10),
wherein the state information (161) of each of the plurality of communication devices (10) contains a remaining capacity of the battery (13) of each of the plurality of communication devices (10), and
wherein the master-slave determination condition (163) is a condition related to the battery (13) of each of the plurality of communication devices (10).

3. The method (S100, S200, S300, S400) as claimed in claim 2, wherein constructing the cluster-type network contains constructing the cluster-type network so that one communication device (10) having a largest remaining capacity of the battery (13) among the plurality of communication devices (10) is set as the master unit (10A).

4. The method (S100, S200, S300, S400) as claimed in claim 1, wherein the state information (161) of each of the plurality of communication devices (10) contains an arithmetic processing capability of a processor (11) of each of the plurality of communication devices (10), and
wherein the master-slave determination condition (163) is a condition related to the processor (11) of each of the plurality of communication devices (10).

5. The method (S100, S200, S300, S400) as claimed in claim 4, wherein constructing the cluster-type network contains constructing the cluster-type network so that one communication device (10) having a highest arithmetic processing capability of the processor (11) among the plurality of communication devices is set as the master unit (10A).

6. The method (S100, S200, S300, S400) as claimed in any one of claims 1 to 5, wherein constructing the cluster-type network contains:
performing an authentication process among a plurality of communication devices (10) with a predetermined authentication condition (162) to determine the plurality of communication devices (10) to be used for constructing the cluster-type network, and
constructing the cluster-type network with only the plurality of communication devices (10) determined to be used for constructing the cluster-type network.

7. The method (S100, S200, S300, S400) as claimed in claim 6, wherein the predetermined authentication condition (162) is whether or not the plurality of communication devices (10) are located so as to be separated from each other within a predetermined separation distance, and
wherein the cluster-type network is constructed from only the plurality of communication devices (10) located so as to be separated from each other within the predetermined separation distance.

8. The method (S100, S200, S300, S400) as claimed in claim 6, wherein the predetermined authentication condition (162) is whether or not the communication device (10) is located so as to be separated from arbitrary one of the plurality of communication devices (10) within a predetermined separation distance, and
wherein the cluster-type network is constructed from only the plurality of communication devices (10) located so as to be separated from the arbitrary one of the plurality of communication devices (10) within the predetermined separation distance.

9. The method (S100, S200, S300, S400) as claimed in claim 6, wherein the predetermined authentication condition (162) is whether or not the communication device (10) can provide a predetermined function, and
wherein the cluster-type network is constructed from only the plurality of communication devices (10) which can provide the predetermined function.

10. The method (S100, S200, S300, S400) as claimed in claims 1 to 9, wherein the master unit (10A) is connected to each of the slave units (10B) through pairing connections according to a BLE (Bluetooth low energy) standard.

11. The method (S100) as claimed in any one of claims 1 to 10, wherein constructing the cluster-type network contains constructing a star-type network so that one of the plurality of communication devices (10) is set as the master unit (10A) according to the predetermined master-slave determination condition (163) and other communication devices (10) of the plurality of communication devices (10) are set as slave units (10B).

12. The method (S200, S300, S400) as claimed in any one of claims 1 to 10, wherein constructing the cluster-type network contains constructing a multi-hierarchy cluster-type network so that one of the plurality of communication devices (10) is set as the master unit (10A) according to the predetermined master-slave determination condition (163) and other communication devices (10) of the plurality of communication devices (10) are set as submaster units (10C) or slave units (10B).

13. The method (S200, S300, S400) as claimed in claim 12, wherein each of the plurality of communication devices (10) is configured so that the number of other communication devices (10) simultaneously connected thereto does not exceed a maximum connection number (165) thereof, and
wherein constructing the multi-hierarchy cluster-type network contains instructing from the master unit (10A) to each of the other communication devices (10B) belonging to a hierarchy level lower than a hierarchy level of the master unit (10A) by one to become the submaster unit (10C) when the number of other communication devices (10) connected to the master unit (10A) reaches the maximum connection number (165) of the master unit (10A).

14. The method (S200, S300, S400) as claimed in claim 13, wherein constructing the multi-hierarchy cluster-type network further contains instructing from the submaster unit (10C) to each of the other communication devices (10) belonging to a hierarchy level lower than the hierarchy level of the submaster unit (10C) by one to become a new submaster unit (10C) when the number of other communication devices (10) connected to the submaster unit (10C) reaches the maximum connection number (165) of the submaster unit (10C).

15. A communication system (1) constructed from a plurality of communication devices (10),
wherein each of the plurality of communication devices (10) includes a processor (11) and a memory (15) connected to the processor (11),
wherein the memory (15) of each of the plurality of communication devices (10) stores:
an information transmission module (15) for mutually transmitting a signal containing state information (161) related to a state of each of the communication devices (10) among the plurality of communication devices (1), and
a master-slave determination module (173) for determining whether each of the communication devices (10) should be set as a master unit (10A) or a slave unit (10B) according to a predetermined master-slave determination (163) condition and based on the state information (161) of each of the plurality of communication devices (10) contained in the signal, and
wherein a cluster-type network is constructed so that one of the plurality of communication devices (10) is set as the master unit (10A) according to determination of the master-slave determination module (173).
